# EUROPEAN PATENT SPECIFICATION

(11) **EP 0 913 788 B1**
(45) Date of publication and mention of the grant of the patent: **04.07.2007**
(21) Application number: 98308761.0
(22) Date of filing: 27.10.1998
(51) Int. Cl.: G06Q 10/00, G06F 1/00, H04N 7/16

(54) **A reproduction apparatus for reproducing digital data and a computer-readable recording medium recording a reproduction Program**
Wiedergabegerät zum Anzeigen von digitalen Daten und ein per Computer lesbares Aufzeichnungsmedium zum Speichern eines Wiedergabeprogramms
Appareil de reproduction pour la reproduction de données numériques et support d'enregistrement lisible par ordinateur pour l'enregistrement d'un logiciel de reproduction

(30) Priority: 28.10.1997 JP 29512497
(43) Date of publication of application: 06.05.1999
(73) Proprietor: MATSUSHITA ELECTRIC INDUSTRIAL CO., LTD., Kadoma-shi, Osaka 571-0000 (JP)
(72) Inventor: Yamamoto, Masaya c/o Matsushita Elec. Ind. Co., Ltd. Int. Prop. Rights Operations Company IP Develop. Center, Chuo-ku, Osaka 540-6319 (JP); Mimura, Yoshihiro c/o Matsushita Elec. Ind. Co., Ltd. Int. Prop. Rights Operations Company IP Develop. Center, Chuo-ku, Osaka 540-6319 (JP); Watanabe, Shigeaki c/o Matsushita Elec. Ind. Co., Ltd. Int. Prop. Rights Operations Company IP Develop. Center, Chuo-ku, Osaka 540-6319 (JP); Kozuka, Masayuki c/o Matsushita Elec. Ind. Co., Ltd. Int. Prop. Rights Operations Company IP Develop. Center, Chuo-ku, Osaka 540-6319 (JP)
(74) Representative: Crawford, Andrew Birkby

(56) References cited:
- WO-A-94/13107
- WO-A-96/09591
- US-A- 5 422 674
- US-A- 5 548 345
- US-A- 5 590 197

## Description

### BACKGROUND OF THE INVENTION

### 1. Field of the Invention

The present invention relates to a reproduction apparatus with an ordering feature for electronically ordering products.

### 2. Description of the Background Art

Systems that allow users to purchase goods via a computer network, which is to say, online shopping systems, are generally achieved by data communication on a computer network between a purchaser terminal device and a server of the service provider. In such a system, the purchaser terminal device transmits an order which is received by the server of the service provider.

When purchasing a product, a user of an online shopping service does not need to input his/her name, to write a signature, or to settle the account in person.

While the above description focuses on the fundamental aspects of online shopping, new services that are incorporated into satellite broadcasting systems have been proposed.

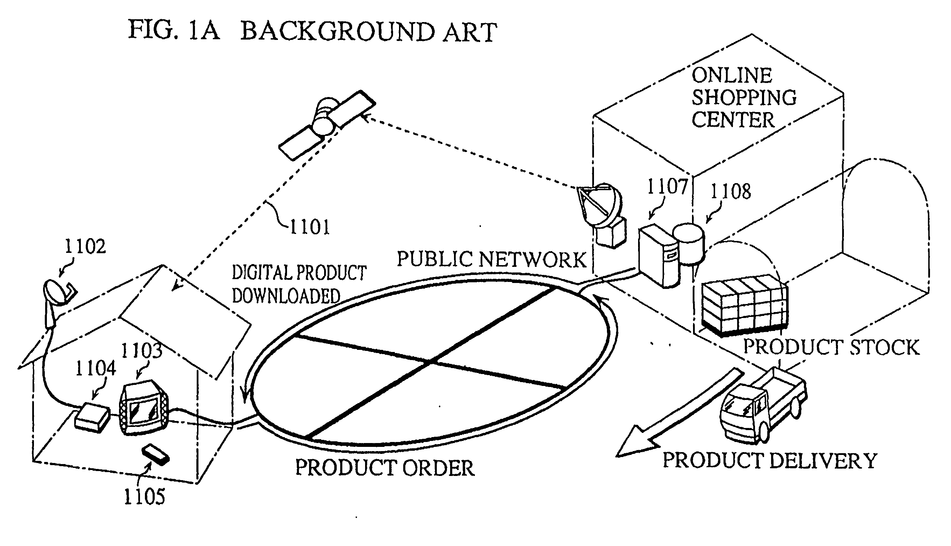

Fig. 1A shows the construction of an online shopping system that is incorporated into a satellite broadcasting system.

As shown in Fig. 1A, the service provider transmits the broadcast wave 1101 to the user. This broadcast wave 1101 includes video images that introduce products on sale, audio for an accompanying explanation, and program information that includes a number of sets of button data. Each set of button data includes image data for displaying a button and various types of information. Buttons produced by the button data may be pressed by the user. The antenna 1102 receives the broadcast wave 1101 and sends it to the set-top box 1104. The set-top box 1104 separates the data in the received broadcast wave 1101 into video information, audio information, and program information, decodes the various types of information, and outputs the decoding result. The TV set 1103 displays the decoded video images, while a speaker provided in the TV set 1103 reproduces the decoded audio.

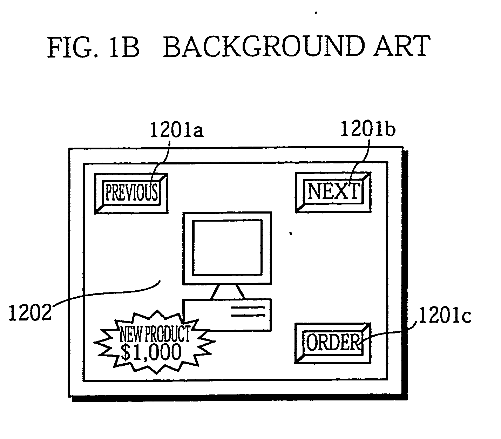

Fig. 1B shows a product ordering screen 1202 that is displayed on the TV set 1103. As shown in the drawing, the product ordering screen 1202 displays information such as images, text and price for a product on sale. By operating the remote commander 1105, the user can indicate up/down and left/right movement of a cursor, and so change any of the buttons displayed on the TV screen to a selection state. If the user presses the Enter key on the remote commander 1105 with one of the buttons in the selection state, the set-top box 1104 executes the command assigned to the selected button.

The buttons displayed on the screen include buttons for switching the display content of the screen (such as the "Previous" button 1201a and "Next" button 1201b in Fig. 1B), and a button (the "Order" button 1201c in Fig. 1B) for having the set-top box 1104 send a product order for the presently displayed product. The set-top box 1104 switches the display on the screen whenever the user presses the "Previous" button 1201a or "Next" button 1201b, so that the user is able to view information on a number of products until a desired product is found. This differs from television commercials that are unidirectionally broadcast with no consideration to the users tastes or interests, so that online shopping systems that are combined with satellite broadcasting have more of a "magazine" feel to them.

When the user presses the button provided for ordering a product, the set-top box 1104 refers to information such as the product identification number that is included in the button information in the broadcast wave and generates an order request. A modem device provided in the set-top box 1104 then transmits the generated order request to the service provider via a public network.

The order receiving server 1107 provided at the service provider's facility receives the transmitted order form and stores in the database 1108. The service provider then refers to the order data in the database 1108 and checks whether the ordered product is in stock, in which case the service provider can proceed to arrange the delivery of the product by a delivery service. If the ordered product is not in stock, the service provider will send an appropriate message to the set-top box 1104 of the consumer.

When the ordered product is digitized music or another kind of digital product, the service provider bills the user for the required payment and then has the set-top box 1104 download the digital product from the service provider order receiving server to provide the consumer with the ordered digital product.

WO-A-9413107 discloses a set-top terminal for a television channel delivery system, which provides menu driven program selection by the user, based on information relating to available programming, which is transmitted to the user in the form of digital data decoded by the set-top terminal.

A first advantage of the kind of online shopping system described above is that service providers are able to use images and sound to promote the features of their products, and by doing so capture the attention of consumers. A second advantage of the system is that by enabling consumers to order products by the simple press of a button, a large increase in the number of orders is observed.

In more detail, service providers can make an appealing sales pitch using images and sound to generate a consumer's interest in their products and, having just aroused the consumer's interest, display a button image that allows the consumer to purchase the product. As a result, consumers can be urged to buy a product and to order it without further consideration. In this way, online shopping services can increase the sale of products by making a psychologically skillful appeal to the consumer.

With the above online shopping system, however, the arousal of a desire in the consumer to purchase the product coupled with the ease with which the product can be purchased may result in a large incidence of purchases being made without the consent of persons with the right to order (hereinafter, "authorized persons").

Here, the expression "authorized person" refers to the person who will settle the account when products are purchased via a given set-top box 1104. This can equate to a subscriber of satellite broadcasting or a network, a registered person for a public network (e.g., telephone system), or the head of the household where the set-top box 1104 is installed. Orders made without the consent of the authorized person can be caused by mistakes made by the authorized person themself, or by unauthorized actions of persons aside from the authorized person, especially minors who are not being supervised by their parents.

To prevent orders being made without the consent of the authorized person, a system locking method may be provided for the set-top box 1104. This means that the authorized person may lock the set-top box 1104 in a non-active state, with activation of the set-top box 1104 only being possible after the authorized person has deactivated the lock.

While the locking system described above is suitable for cash registers or business terminals, the set-top box 1104 is fundamentally a domestic appliance, so that the inability to view the products on sale without first having the authorized person deactivate the lock provides a major limitation for the viewing of satellite broadcasting. This would also lead to a decrease in the ratings for satellite broadcasts.

US-A-5590197 discloses a cyber wallet which may be stored on a computer or other electronic storage medium, for the purpose of making electronic payments to a merchant at a remote site on the Internet. This document further discloses the "unlocking" of the electronic wallet by requiring the user to enter an identification number before a transaction is allowed to proceed.

It would conceivably be possible to provide a partial lock which instead of locking the entire system, would only prevent unauthorized persons from making button operations. However, the digital data included in satellite broadcasts includes buttons for switching the display, such as the "Previous" button 1201a, and the "Next" button 1201b in Fig. 1B, with these buttons being used to realize the interactive display of video images by the system. To prohibit all button operations simply because one of the buttons is an order button results in the loss of the interactive nature of the display, and restricts the freedom with which users may view the products on sale.

As an alternative to a system locking method, it would conceivably be possible to use a stricter process for verifying the authority of the consumer whenever a product order is made. When the user tries to make a product order, the set-top box 1104 could have the consumer enter the number of a credit card to be used for the payment, and then only proceed with the transmission of the order if the user has entered the correct number. Since ordering would not be possible without the input of the correct card number, this arrangement would be effective in preventing orders from being made without the consent of the authorized person. However, this would require the consumer to input the credit card number every time a purchase is made, even when inexpensive products are being ordered. Credit card numbers are often composed of ten or more alphanumeric characters, so that input of such when making an order can be troublesome. Should the user make mistakes while inputting the number via a ten-key pad, the frustration at doing so can lead to the user losing interest in the product, so that the user may end up deciding not to order. For this reason, troublesome authentication processes that result in the user losing interest in products can undermine the commercial value of such online shopping systems.

### SUMMARY OF THE INVENTION

It is a first object of the present invention to provide a reproduction apparatus which allows broadcasts to be freely viewed but prohibits orders from being made without the consent of an authorized person.

It is a second object of the present invention to provide a reproduction apparatus that allows products to be ordered with a simple operation, but strictly prohibits the ordering of products without the consent of an authorized person.

The present invention provides a reproduction apparatus reproducing digital data supplied by a business, wherein the digital data includes sets of video information relating to a plurality of video images, and sets of button data corresponding to a plurality of button images to be arranged on each of the video images,
each set of button data including a control command to be executed when the button image corresponding to the set of button data is indicated,
one of a plurality of control commands being for instructing the reproduction apparatus to transmit a product order to the business,
the reproduction apparatus comprising:
reproducing means for displaying each of the video images based on the sets of video information, and arranging the plurality of button images on each of the video images based on the sets of button data; and
first receiving means for receiving a user operation from a user;
characterised in that
each set of button data further comprises information from which is derivable an execution condition level,
the execution condition level derivable from the information included in the same set of button data as the control command setting an execution condition according to an importance of the product order, and
the reproduction apparatus further comprises:
storage means including a storage region storing a permitted level that shows an extent to which user operations are permitted;
permitting means for judging, when the user operation received by the first receiving means indicates one of the plurality of button images, whether the execution condition level derivable from the set of button data corresponding to the button image is within the permitted level; and
executing means for executing the control command only when the permitting means judges the execution condition level to be within the permitted level.

When a product order operation is made, transmission of the product order is only performed after the permitting means has referred to the permitted level and approved the order. As a result, orders made against the wishes of the authorized person can be avoided, even when persons aside from the authorized person operate the reproduction apparatus.

Since interactive operations such as the switching of displayed content are not subject to approval by the permitting means, persons aside from the authorized person are free to have the video and audio included in the digital data reproduced by the reproduction apparatus.

The storage region in the storage unit may be in a locked state where rewriting is not possible, and the reproduction apparatus may further include: a judging unit for judging, when the user operation received by the first receiving unit is a rewriting operation for the storage region, whether a user who made the user operation is authorized; a second receiving unit for changing, when the judging unit has judged that the user is authorized, the storage region from the locked state to an unlocked state and receiving an operation setting a new permitted level; and a writing unit for writing, when the second receiving unit has received the new permitted level, the new permitted level into the storage region and then returning the storage region to the locked state.

When the user changes the execution permission judging information, the user has to make an operation, such as the inputting of a PIN, that cannot be performed by other persons. As a result, the execution permission judging information cannot be changed by children or others through malevolence, thereby ruling out the possibility of unauthorized operations being made.

The digital data includes sets of button data, each set of button data corresponding to a different button to be displayed on an image included in the digital data, each set of button data including a control command to be executed when the button corresponding to the button data is indicated, and one of the plurality of control commands instructing the reproduction apparatus to transmit a product order to the business. Preferably, the reproduction unit includes an arranging unit for arranging at least one button image onto an image included in the digital data, the first receiving unit including an indication receiving unit for receiving an indicating operation that indicates one of the buttons arranged by the arranging unit, the approving unit including a permission judging unit for referring to the permitted level and to a control content of the control command in a set of button data corresponding to a button image indicated by the indicating operation, and for judging whether execution of the control command is permitted, and the product order transmitting unit only transmitting a product order to the business when the control command in a set of button data corresponding to a button image indicated by the indicating operation relates to an order and the permission judging unit has judged that execution of the control command is permitted.

With the stated construction, the ordering of products can be performed with the simple press of a button. As a result, consumers are able to quickly and easily order products that have been introduced using video and audio, before reconsidering the decision to buy.

Here, the reproduction apparatus may further include: a holding unit for holding, when the permission judging unit judges that execution of a control command is not permitted, the control command; and a display unit for generating, when the judging unit judges that the inputted PIN is correct and a new permitted level written into the storage region by the writing unit is higher than a previous permitted level, indications showing a product ordering content of each control command held by the holding unit and displaying the generated indications; and a third receiving unit for receiving, after the generated indications have been displayed, an operation made by the user to approve an execution of one of the control commands held by the holding unit, the product order transmitting unit transmitting, when the user has made an operation to approve a control command held in the holding unit and the permission judging unit judges that execution of the control command is permitted, a product order to the business.

With the stated construction, the authorized person is able to review the attempted product orders made by others and then determine whether to approve of such orders. This allows the authorized person to censure the orders made by others.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the Drawings:
Fig. 1A shows the construction of an online shopping system that is incorporated into a satellite broadcasting system;
Fig. 1B shows the product ordering screen 1202 displayed on the TV set 1103;
Fig. 2 shows the composition of the digital data;
Fig. 3 shows examples of contents that are displayed based on the video information in the digital data;
Fig. 4 shows the data construction of the program stream and the button data;
Fig. 5A shows an example of the button data that is set based on the display contents of Fig. 3;
Fig. 5B shows the correspondence between the three-bit execution condition information and the parental levels;
Fig. 6 shows an example setup where the reproduction apparatus is set up in a household;
Fig. 7 is a block diagram showing the configuration of the reproduction apparatus 21 in the first embodiment;
Fig. 8A shows an example setting of the execution permission judging information;
Fig. 8B shows the settings of whether execution of a control command is permitted or prohibited, depending on the various relationships between the execution condition information and execution permission judging information;
Fig. 9 is a flowchart showing the processing in the main procedure of the control unit 5 and the processing when the user tries to change the execution permission judging information;
Fig. 10 is a flowchart showing the processing when the user presses the Enter key with one of the button images in the selection state;
Figs. 11A to 11D show the case where User B operates the remote controller 23 and presses the various buttons for Case 2 shown in Fig. 8A;
Figs. 12A to 12C show the case where User B operates the remote controller 23 and presses the various buttons for Case 2 shown in Fig. 8A;
Figs. 13A to 13C show the case where User A operates the remote controller 23 and presses the various buttons for Case 1 shown in Fig. 8A;
Fig. 14 shows the configuration of the reproduction apparatus 21 in the second embodiment;
Fig. 15 is a flowchart showing the processing of the control unit 5 in the second embodiment;
Fig. 16 is a flowchart showing the processing of the control unit 5 when confirming a control command;
Fig. 17 shows the display content when a product order indication has been confirmed by the authorized person;
Fig. 18 shows the configuration of the reproduction apparatus 21 in the third embodiment; and
Fig. 19 is a graph showing an example of the evaluation function.

### DESCRIPTION OF THE PREFERRED EMBODIMENTS

### First Embodiment

The following is a description of the reproduction apparatus of the present invention with reference to the drawings.

### Data Construction of the Digital Data

The following description will first focus on the data construction of digital data that is reproduced by the reproduction apparatus.

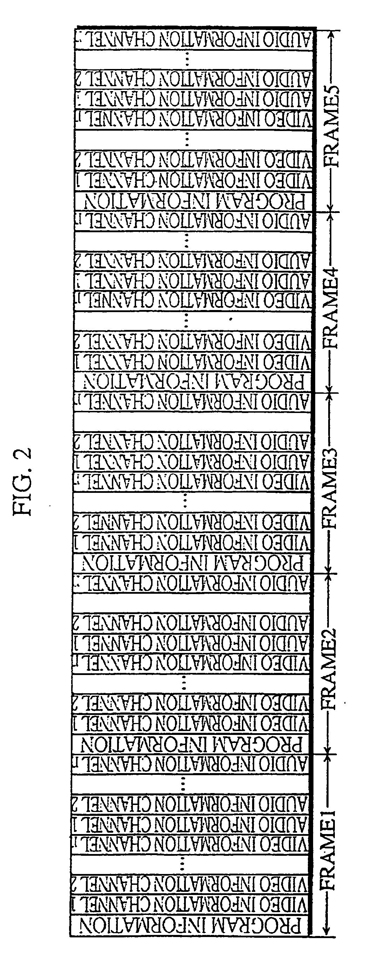

Fig. 2 shows the data construction of the digital data. As shown in the figure, the digital data includes the video information channels 1, 2 ..., n, the audio information channels 1, 2, ..., n, and program information. These different kinds of information are multiplexed in frame units. The video information, audio information, and program information are extracted from each frame and combined for each channel by a reproduction apparatus, so that a video stream, an audio stream, and a program stream are generated in channel units.

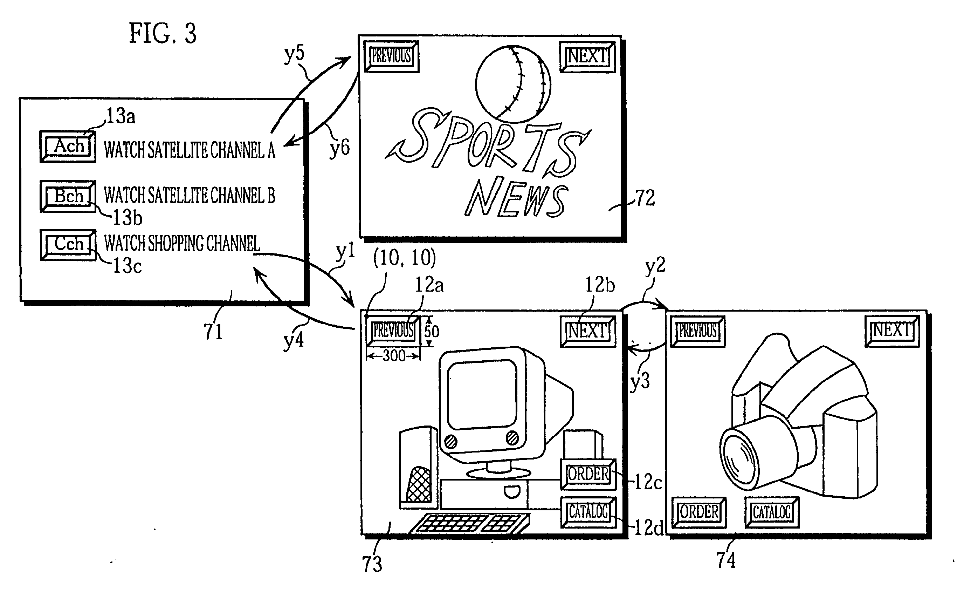

The video streams that are produced by this combining include video data that has been compressed according to MPEG2 (Moving Pictures Experts Group 2) methods. Fig. 3 shows examples of the display content produced by displaying this video data. In this drawing, the video data is shown to include the menu image 71 for displaying the main menu, the news image 72 for displaying sports news, the shopping image 73 for introducing popular domestic appliances such as a digital camera, and shopping image 74.

Buttons, such as the previous page button 12a for receiving a switching operation to the images on the previous page, the next page button 12b for receiving a switching operation to the images on the next page, the order button 12c for receiving an order, the catalog requesting page 12d for receiving a request for catalog, the A channel switching button 13a, the B channel switching button 13b, the C channel switching button 13c, are arranged on top of these pages. These button images are displayed using image data that is included in the program stream.

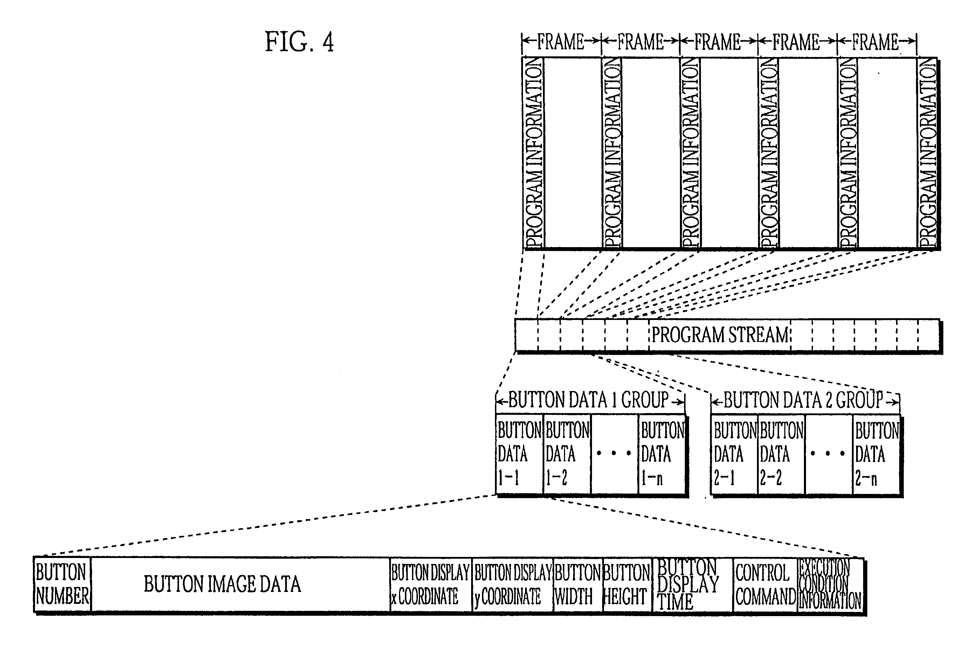

Fig. 4 shows the data construction of the program and the button data. In this drawing, the top level shows the program information that is multiplexed in frame units, while the second level shows the program stream that is obtained by combining a plurality of sets of program information.

The third level in Fig. 4 shows the inclusion of a plurality of sets of button data in the program stream. This third level shows that button data 1, given as button data 1-1, 1-2, 1-3 ... 1-n, is repeatedly transmitted n times, while button data 2, given as button data 2-1, 2-2, 2-3 ... 2-n, is also repeatedly transmitted n times.

The reason each set of button data is repeatedly transmitted n times is that part of a set of received button data will be missing if the reproduction apparatus commences the reception process for the broadcast wave midway through the transmission of the button data, or if the transmission conditions deteriorate during the transmission of the button data. Though there is the risk of such data loss, repeatedly transmitting the same button data ensures that the button data will be received at least once in its entirety.

In the present embodiment, a separate set of button data is provided for each button image to be displayed on the screen.

The following is a description of the construction of the button data which is shown on the fourth level of Fig. 4. The button data shown on the fourth level includes a button number, button image data, a button display x coordinate, a button display y coordinate, a button width, a button height, a button display time, a control command, and execution condition information.

The button number is a serial number that is given to each button.

The button image data is data obtained by subjecting computer graphics for drawing the button to run-length encoding.

The button display x coordinate and button display y coordinate is information indicating the x and y coordinates of the position at which the image data given by the button image data may be displayed, with the top left corner of the screen as the origin (0,0).

The button width and button height show the size to be set on the screen for the image data showing the button image.

The "button display time" shows the period for which the button image should be displayed on the screen.

The control command is a command that should be executed by a reproduction apparatus on detecting that the button has been pressed.

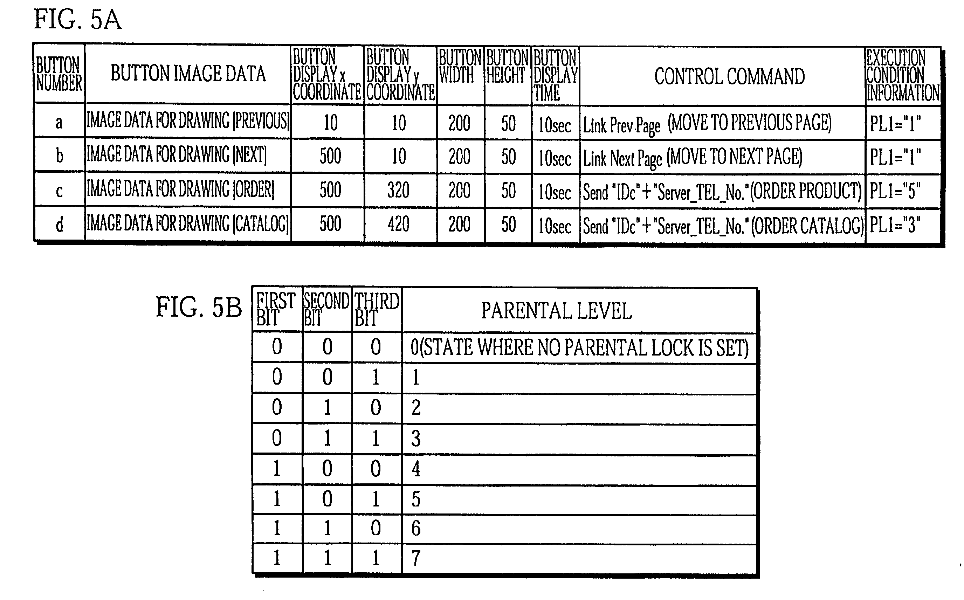

Fig. 5A shows example sets of button data for the display examples shown in Fig. 3. In these examples, the three control commands, "LinkPrevPage", "LinkNextPage", and "Send" are given. In Fig. 5A, the "LinkPrevPage" command is a control command for instructing the reproduction apparatus to switch the display of video information to the previous page, while the "LinkNextPage" command is a control command for instructing the reproduction apparatus to switch the display of video information to the next page.

When the LinkPrevPage command of the previous page button 12a arranged at the top of the shopping image 73 shown in Fig. 3 is executed by the reproduction apparatus, the reproduction apparatus switches the display from the shopping image 73 to the menu image 71, as shown by the arrow y4 drawn with a solid line. On the other hand, when the LinkNextPage command of the previous page button 12b arranged at the top of the shopping image 73 is executed by the reproduction apparatus, the reproduction apparatus switches the display from the shopping image 73 to the shopping image 74, as shown by the arrow y2 drawn with a solid line. In the same way, execution of the LinkPrevPage and LinkNextPage commands included in other sets of button data results in the reproduction apparatus switching the display between sets of video data, as shown by the arrows y3, y4, y5, and y6 drawn with a solid line.

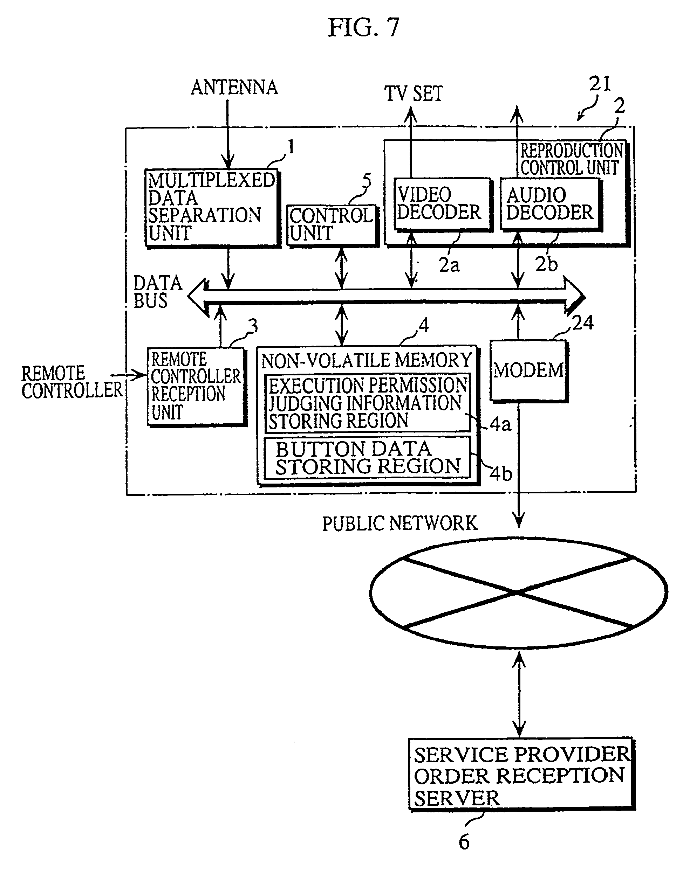

The command "IDc"+"Server_TEL.NO" is a command that instructs the reproduction apparatus to transmit the product code IDc for the product "personal computer" and the USER_ID assigned to the authorized person for the reproduction apparatus to the destination given as the "Server_TEL.NO". The command "Send "IDd"+"Server_TEL.NO", meanwhile, is a command that instructs the reproduction apparatus to transmit a product catalog request code IDd and the USER_ID assigned to the authorized person for the reproduction apparatus to the destination given as the "Server_TEL.NO". The "Server_TEL.NO" is the telephone number of the service provider order reception server 6 shown in Fig. 7, so that the execution of these Send commands results in the product or catalog code and the USER_ID being transmitted to the service provider order reception server 6 to start the order process.

When a send command is executed to order a product, the service provider uses the USER_ID transmitted by the send command to search a database for a credit card number or bank account number that has been registered with the service provider in advance. This means that the execution of a send command for an order request will result in the service provider withdrawing the required amount from the card account or bank account registered in the database.

The execution condition information in each set of button data is information that stipulates conditions for the execution of the control command of the button data. Such conditions are required since the execution of a control command can equate to ordering of a product or entering into a commercial contract, meaning that there is a risk that unauthorized execution of the control command will adversely affect the authorized person. Control commands with execution conditions stipulated by the execution condition information may only be executed if the internal settings of the reproduction apparatus comply to the stated conditions.

In the present embodiment, the strictness of the conditions is expressed using a parental level (abbreviated to "PL1", for example) which is a number given as one of n values.

Fig. 5B shows the correspondence between 3-bit execution condition information and parental levels. Here, the strictness of the execution condition information is expressed as a 3-bit parental level. The 3-bit information given here is converted into a parental level with a value from 0 to 7. Of these, the value 0 equates to when no parental level has been set.

Low parental levels are set for button data where unauthorized execution of the control command has little or no effect on the authorized person. Conversely, high parental levels are set for button data where unauthorized execution of the control command can have a significant adverse effect on the authorized person.

The values between 1 and 7 should ideally represent settings that correspond to the price range of the products to be ordered by a control command. A button used for ordering an inexpensive product should be set a low value as its parental level, while a button used for ordering an expensive product should be set a high value as its parental level. Also, when the ordering of a product is subject to legal or other restrictions, such as when a legally binding procedure needs to be undertaken by the authorized person, the button in question should be set a high value as its parental level.

The following is an explanation of the generation of button data, with reference to Fig. 5A, to complete the description of the button data.

The previous page button 12a is positioned at the coordinates (10,10) at the top-left of the screen and has a width of 200 and a height of 50. Accordingly the button display X coordinate, the button display Y coordinate, the button width, and button height are respectively set at 10, 10, 200, and 5. The display period for the previous page button 12a is 10 seconds, so that the button display time is set at 10s. The control command for this button indicates a switching of the video information to the previous page. The execution of the control command for switching the displayed page will have no detrimental effect on the authorized person, so that the execution condition information is set at the low value "1".

The next page button 12b is also used for switching the displayed page. The next page button 12 is a button image for switching to the display to next page of video information, so that once again execution of this command will have no detrimental effect on the authorized person. Accordingly, the execution condition information is set at the low value "1".

In the present example, the order button 12c and catalog requesting page 12d are provided as buttons related to the ordering of products.

The control command that is associated with the catalog requesting page 12d transmits a request to the service provider for a product catalog. The ordering of catalogs is usually free for consumers, though such action often results in companies obtaining personal information about the consumer. This risk of the personal information being obtained by third parties means that the ordering of a catalog may have a detrimental effect on the authorized person. Accordingly, the consent of the authorized person should be sought when action is taken, meaning that the execution condition information is set at "3".

The order button 12c is the button for ordering an expensive product, so that execution of the control command associated to this button carries the risk that a large sum will be withdrawn from the authorized person's account. This amounts to significant harm to the authorized person, so that it is essential for the authorized person to consent to the execution of this command. As a result, the execution condition information is set at "5".

### Configuration of the Reproduction Apparatus

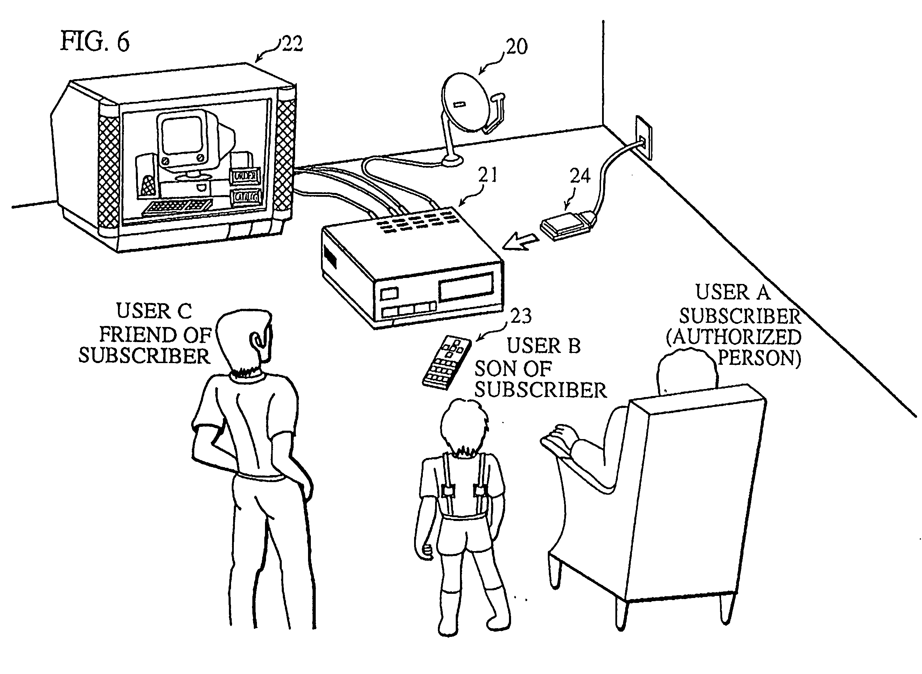

The following is a description of a reproduction apparatus that reproduces digital data that has the data construction described above. Fig. 6 shows an example where such reproduction apparatus is provided in a household. In this example, the antenna 20 receives the broadcast wave and outputs it to the reproduction apparatus 21. The reproduction apparatus 21 then displays the video images and button images of Fig. 3 on the TV set 22.

The remote controller 23 has cursor keys for changing one of the buttons to the selection state, an Enter key for confirming the button that is in the selection state, numeric keys for performing numeric input, and a Change key for indicating that the execution permission judging information (described later) is to be changed. The remote controller 23 sends an infrared signal showing a key code to the reproduction apparatus 21. The "pressing" of a button displayed on the screen of the TV set 22 is performed by indicating the button in question using the cursor keys provided on the remote controller 23 and then confirming the selection by pressing the Enter key on the remote controller 23.

When a button has been indicated using the cursor keys, the button will be displayed using a different color to the other buttons. This state whereby the display color of the button changes to attract the attention of users is called the selection state, with buttons that are not in the selection state being in a standard state.

The modem 24 transmits an order request signal to the service provider order reception server 6 when a user has pressed the order button.

In Fig. 6, the reproduction apparatus 21 is a domestic appliance that is located in the home of User A. As part of the subscription contract that User A has signed with a provider of satellite broadcasting, when a product is ordered using the reproduction apparatus 21, User A is obliged to settle the payment for the product, making User A the authorized person in this example. However, persons aside from User A are able to operate the reproduction apparatus 21 located in User A's home. Examples of such persons are User B, who is User A's son, and User C, who is User A's friend.

The following is a description of the reproduction apparatus 21. Fig. 7 is a block diagram showing the configuration of the reproduction apparatus 21 in this first embodiment of the present invention.

The reproduction apparatus 21 of Fig. 7 includes a multiplexed data separation unit 1, a reproduction output unit 2, a remote controller reception unit 3, a non-volatile memory 4, a control unit 5, a modem 24, and a data bus.

The multiplexed data separation unit 1 separates video information, audio information, and button data from the broadcast wave transmitted by the service provider.

The reproduction output unit 2 includes a video decoder 2a and an audio decoder 2b which respectively decode the video information and audio information separated by the multiplexed data separation unit 1. The decoding result of the video decoder 2a is outputted to the video input terminals of the TV set 22, while the decoding result of the audio decoder 2b is outputted to the audio input terminals of the TV set 22.

The remote controller reception unit 3 detects presses of the various keys on the remote controller 23, and outputs a key code for a key that has been pressed to the control unit 5.

The non-volatile memory 4 includes an execution permission judging information storing region 4a for storing execution permission judging information and a button data storing region 4b for storing button data. The execution permission judging information is information showing a permitted level that is set in the reproduction apparatus 21 by the authorized person. In the present embodiment, the permitted level is expressed using a parental level (abbreviated to "PL2") which is a numeric value expressed as one of n values.

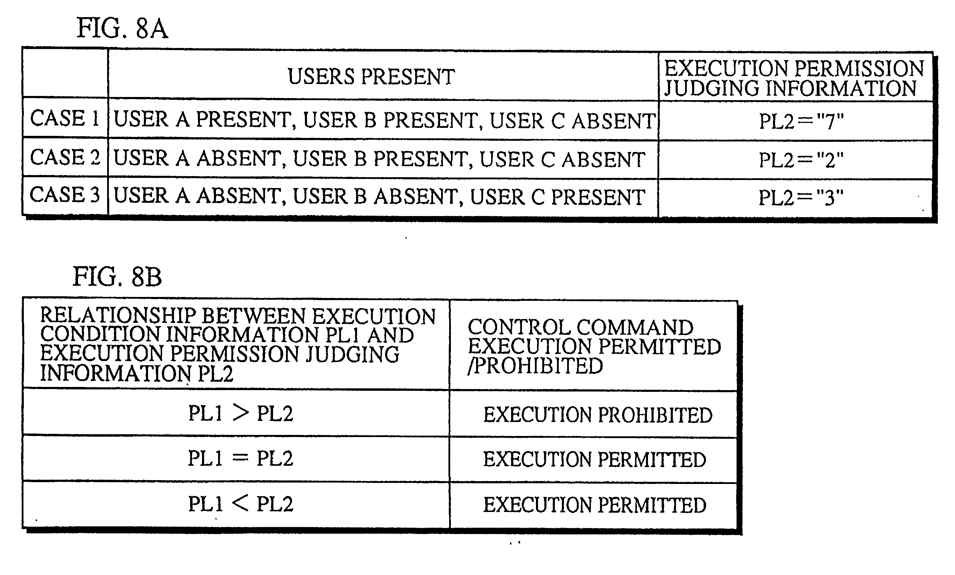

Fig. 8B shows the settings of whether execution of a control command is permitted or prohibited depending on the various relationships between the execution condition information and execution permission judging information.

When the parental level PL1 that is given as the execution condition information is higher than the parental level PL2 given as the execution permission judging information, the control unit 5 judges that the internal settings of the reproduction apparatus 21 do not satisfy the condition of the execution condition information, so that the control unit 5 prohibits the execution of the control command included in the same set of button data as the execution condition information. When the parental level PL1 given as the execution condition information is not higher than the parental level PL2 given as the execution permission judging information, the control unit 5 judges that the internal settings of the reproduction apparatus 21 satisfy the condition of the execution condition information. Accordingly, the control unit 5 permits the execution of the control command in question.

The execution permission judging information storing region 4a can be locked in a state where its content cannot be amended by setting a personal identification number (hereinafter, "PIN") in the reproduction apparatus 21. The execution permission judging information storing region 4a remains in this locked state until a user inputs the correct PIN. When the user inputs the correct PIN, the lock is removed from the execution permission judging information storing region 4a, so that the user may then change the value of the parental level PL2, before locking the execution permission judging information storing region 4a once more.

Fig. 8A shows example settings of the execution permission judging information.

Case 1 in Fig. 8A shows the setting of the execution permission judging information for when User A is present. In Case 1, the ordering of products can be performed under the authority of User A, so that the execution permission judging information is set at the highest possible value "7".

Case 2 in Fig. 8A shows the setting of the execution permission judging information for when User A is absent but User B is present. In such a situation, the absence of User A may lead to User B misusing the reproduction apparatus 21 and ordering products that are not wanted by User A. As a result, the execution permission judging information is set at a low value, such as "2", for Case 2 where User A is absent and User B is present.

Case 3 in Fig. 8A shows the setting of the execution permission judging information for when User A is absent but User C is present. In this situation, there is the risk that User C will order products without the consent of User A. As a result, the execution permission judging information is set at a low value, such as "3", for Case 3 where User A is absent and User C is present.

By setting the execution permission judging information in this way, the authorized person User A may prevent Users B and C from making unwanted orders during his absence.

The modem 24 transmits a variety of information, such as product orders, via a public network to the service provider order receiving server 6.

The control unit 5 includes a ROM storing a control program and a RAM that is used as a work area for executing the control program. By executing the control program, the reproduction apparatus 21 can perform the operations (1) to (7) described below.
(1) Data separation operations that separate video information, audio information, and button data from the digital data.
(2) Video reproduction control operations that reproduce video images by controlling the video decoder 2a with the video information and button information as inputs.
(3) Audio reproduction control operations that reproduce audio by controlling the audio decoder 2b with the audio information and button information as inputs.
(4) Button data storing operations that store the control command and execution condition information of a set of button data in the button data storing region 4b.
(5) Execution permission judging operations that refer to the execution condition information and execution permission judging information when a button has been selected for execution by the remote controller 23, and then judge whether the execution of a control command is permitted.
(6) Execution permission judging information changing operations that only allow the execution permission judging information to be changed when the correct PIN has been inputted.
(7) Control command execution operations that control the various components of the reproduction apparatus 21 based on a control command.

### Video Reproduction Control Operations and Audio Reproduction Control Operations

The following is a description of the operation of the reproduction apparatus 21 which will first focus on image reproduction control operations and audio reproduction control operations.

The control unit 5 first takes the button data from the program stream separated from the received digital data by the multiplexed data separation unit 1 and temporarily stores the button data in the non-volatile memory 4. Next, the control unit 5 controls the video decoder 2a to display the sub-pictures included in button data as buttons on the screen for only the indicated display time.

Once the indicated display time has elapsed, the control unit 5 controls the video decoder 2a to stop the display of the buttons and at the same time deletes the temporarily stored button data.

The control unit 5 also has the video information separated from the digital data outputted to the video decoder 2a. The video decoder 2a decodes the video data that has been compressed according to MPEG2 methods and so produces video images. The control unit 5 also controls the video decoder 2a to superimpose the button images onto the video images and finally generates an NTSC (National Television Standards Committee) video signal which it outputs to the TV set 22. The TV set 22 receives the NTSC video signal and displays video images on its screen.

In the same way as the video information, the audio information separated from the digital data includes audio that has been compressed according to LPCM (Linear Pulse Code Modulation) methods. The control unit 5 has this compressed audio data sent to the audio decoder 2b. The audio decoder 2b processes the compressed audio data according to LPCM methods to convert it into an audio output signal which it outputs to the speaker in the TV set 22. The speaker then performs audio output based on the received audio signal.

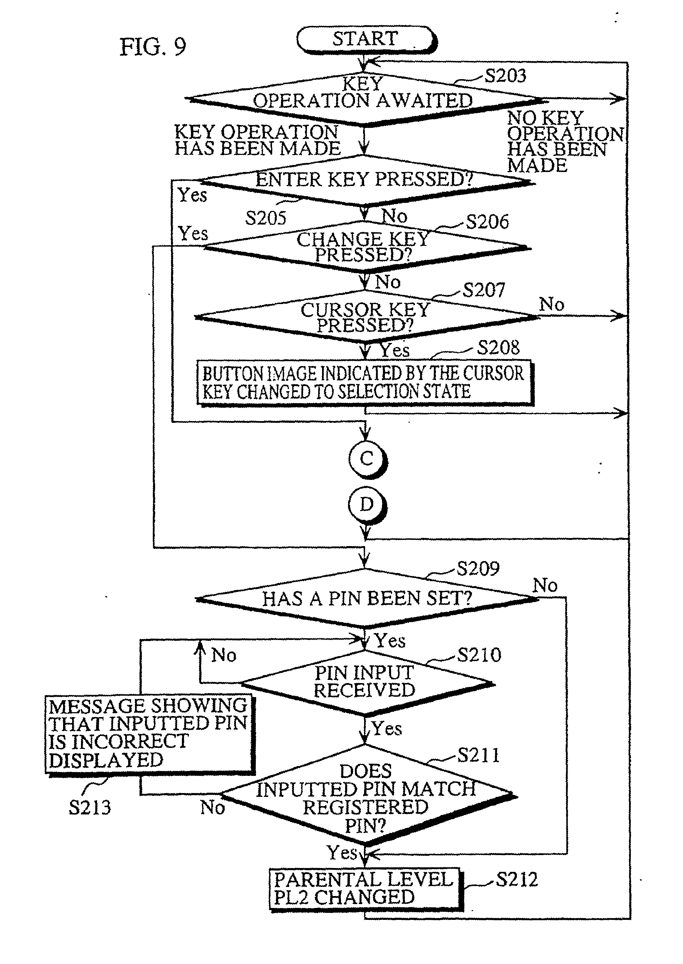

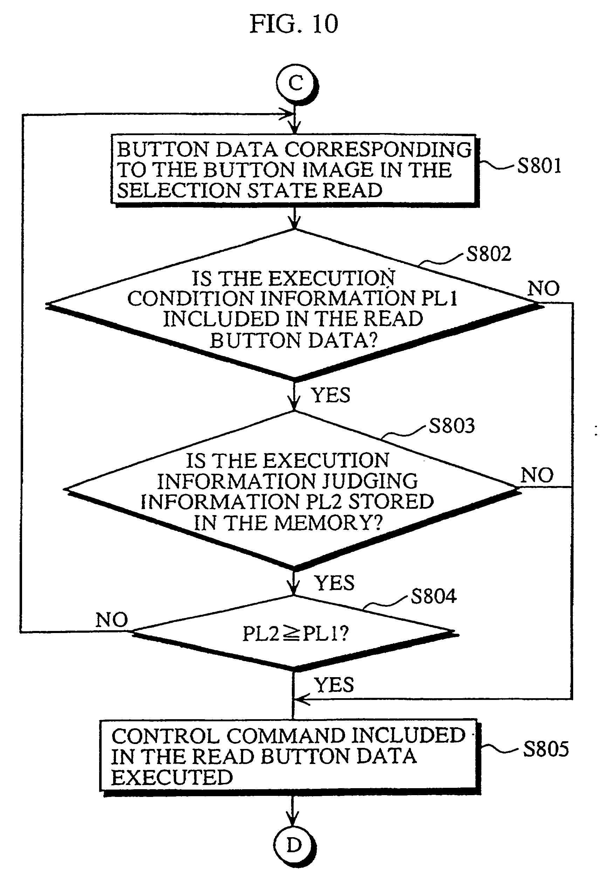

The following is an explanation of the processing of the control unit 5 in response to user operations of the remote controller 23 of the reproduction apparatus 21, with reference to the flowcharts in Figs. 9 and 10.

### Main Flow

Fig. 9 is a flowchart showing the main processing of the control unit 5 and the processing when a user attempts to change the execution permission judging information. In step S203, the control unit 5 monitors whether a key operation has been made. If so, in steps S205 to S207 the control unit 5 judges whether the pressed key is the Enter key, the Change key or one of the cursor keys. When the pressed key is one of the cursor keys, in step S208 the control unit 5 changes the button image indicated by the cursor operation to the selection state, before returning to step S203 and waiting for the next key operation. By changing the button image which is in the selection state in step S208, the user is able to set his/her desired button into the selection state by pressing the cursor keys.

### Processing When Changing the

### Execution Permission Judging Information

When user presses the Change key on the remote controller 23 to change the parental level PL2 with any of the button images in the selection state, the control unit 5 makes the judgement "Yes" in step S206 and proceeds to step S209. In step S209, the control unit 5 checks the setting state of the PIN. If no PIN has been registered, the user is free to change the parental level PL2, so that the processing advances straight to step S212 where the parental level is changed. When a PIN has been registered, the processing first proceeds to step S210 where the user is asked to input the PIN. The user inputs the PIN using the numeric keys on the remote controller 23. This inputting of the PIN in step S210 is performed to prevent other persons or children from changing the set parental level.

In step S211, the control unit 5 compares the inputted PIN with the registered PIN to see whether they match. If so, the processing advances to step S212 to allow the user to change the set parental level PL2, in the same way as when no PIN has been registered. Once the user has finishing changing the set parental level PL2, the control unit 5 removes the lock from the execution permission judging information storing region 4a, writes the amended execution permission judging information into the execution permission judging information storing region 4a, and then locks the execution permission judging information storing region 4a.

When the inputted PIN does not match the registered PIN, the control unit 5 advances to step S213 where a message showing that inputted PIN is incorrect is displayed. Once incorrect PINs have been inputted a number of times, the input of the PIN is terminated and the processing in this flowchart ends.

### Processing When a Button is Selected

Fig. 10 is a flowchart showing the processing when the user presses the Enter key with one of the buttons in the selection state.

When the user presses the Enter key with one of the buttons in the selection state, in step S801 the control unit 5 reads the button data corresponding to the button image that is in the selection state and proceeds to step S802. In step S802, the control unit 5 judges whether execution condition information (=parental level PL1) is present for the selected button. When the parental level PL1 is zero showing that no execution condition has been set, the control unit 5 will immediately proceed to step S805 where it executes the control command corresponding to the selected button. On the other hand, when the parental level PL1 is a non-zero value, this means that a parental level has been set as an execution condition, so that in step S803 the control unit 5 judges whether execution permission judging information (=parental level PL2) is present in the non-volatile memory 4.

When no execution permission judging information is present in the execution permission judging information storing region 4a, the control unit 5 immediately executes the control command corresponding to the selected button. On the other hand, when execution permission judging information has been set, the control unit 5 compares the execution condition information with the execution permission judging information and so judges in step S804 whether the execution of the corresponding control command is permitted. When making this judgement, the control unit 5 compares the parental level PL1 given in the execution condition information with the parental level PL2 given in the execution permission judging information. When PL1 is greater than PL2, the control unit 5 judges that the internal settings of the reproduction apparatus 21 are insufficient for the execution of the control command. Conversely, when PL1 is equal to or less than PL2, the control unit 5 that the reproduction apparatus 21 executes the control command. As a result, the corresponding control command is only executed in step S805 if the condition in the execution condition information is satisfied.

Control commands are executed by the control unit 5 and can result in control of the video decoder 2a, the audio decoder 2b, or the modem 24. In particular, when the control command is for the transmission of an order, execution of such control command results in data for ordering the displayed product being transmitted to the service provider order receiving server 6 via the public network.

The service provider makes the necessary arrangements based on the received information and bills the credit card or bank account which has been registered by the user in advance. When the ordered product is a physical item, the service provider arranges for its delivery. When the ordered product is digitized music or another kind of digital product, the service provider bills the user for the required payment and then has the reproduction apparatus 21 download the digital product from the service provider order receiving server 6, thereby providing the user with the ordered digital product.

### Operation When a Button has been Pressed

The following is a description of the operation of the reproduction apparatus 21 when a button on the screen has been pressed.

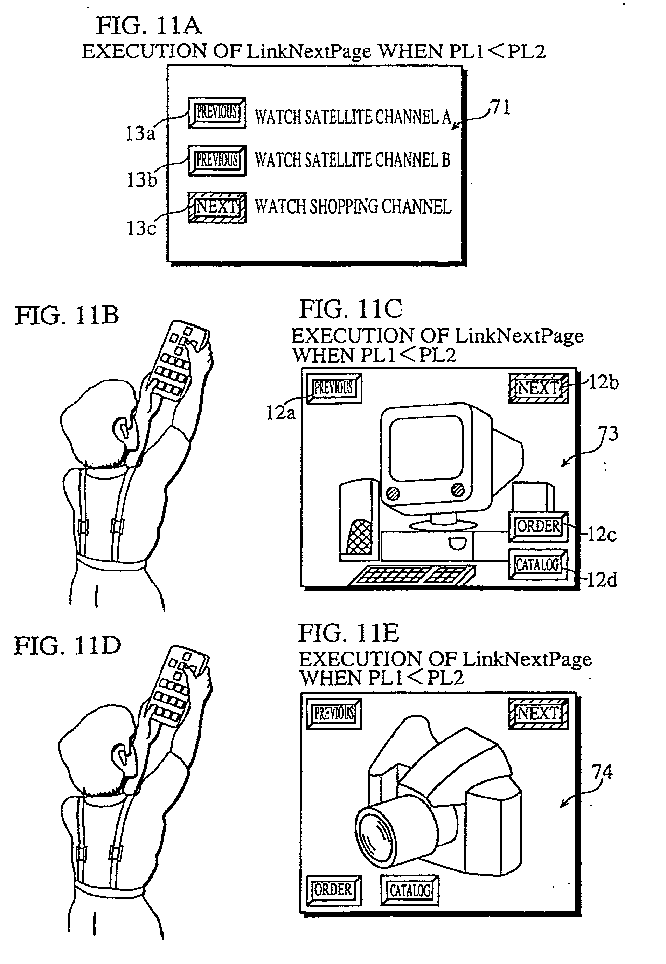

Figs. 11A to 11D correspond to Case 2 shown in Fig. 8A, and show User B pressing the various keys on the remote controller 23 and the pressing of a button on the screen.

As shown in Fig. 11A, the menu image 71, the A channel switching button 13a, the B channel switching button 13b, and the shopping channel switching button 13c are displayed on the screen. In Fig. 11B, User B makes a key operation on the remote controller 23 and so presses the shopping channel switching button 13c. In Case 2, the execution permission judging information is set at the parental level "2". In the present example, the execution control information in each set of button data for the A channel switching button 13a, the B channel switching button 13b, and the shopping channel switching button 13c is the parental level "1", so that the execution of the control commands associated to these buttons is permitted by the execution permission judging information of "2". As a result, the execution of the control command included in the button data for the shopping channel switching button 13c is permitted.

Since the execution of the control command is permitted, the displayed content switches from the menu image 71 to the shopping image 73 shown in Fig. 11C. As shown in Fig. 11C, the above remote controller 23 operation results in the shopping image 73, the previous page button 12a, the next page button 12b, the order button 12c, and the catalog requesting page 12d being displayed. If the remote controller 23 operation shown in Fig. 11D results in the next page button 12b being pressed, the displayed content switches from the shopping image 73 to the shopping image 74 shown in Fig. 11E.

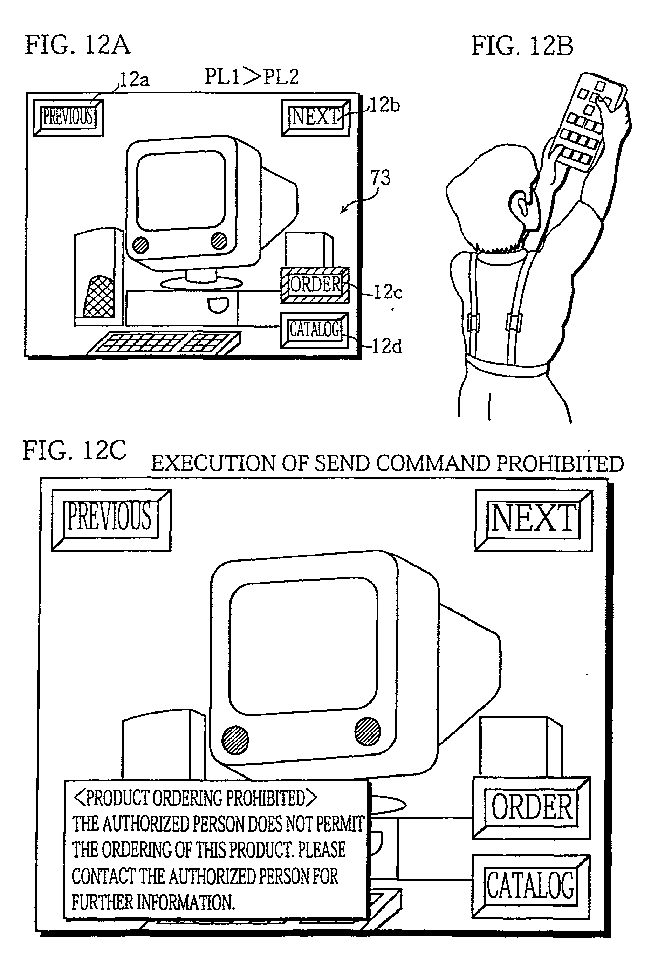

Figs. 12A to 12C correspond to Case 2 shown in Fig. 8A, where User B uses the remote controller 23 to press the various buttons on the screen.

In Fig. 12A, the shopping image 73, the previous page button 12a, the next page button 12b, the order button 12c, and the catalog requesting page 12d are displayed, with the order button 12c being set in the selection state. In this state, User B makes a remote controller 23 operation to press the order button 12c, as shown in Fig. 12B.

In Case 2, the execution permission judging information is parental level "2", while the execution condition information in the button data of the order button 12c is the parental level "7". Here, the control unit 5 judges that the execution of the control command in the button data with the execution control information"7" is beyond the execution permission judging information "2", and so prohibits the execution of this control command. As shown in Fig. 12C, the reproduction apparatus 21 displays a message showing why the control command cannot be executed.

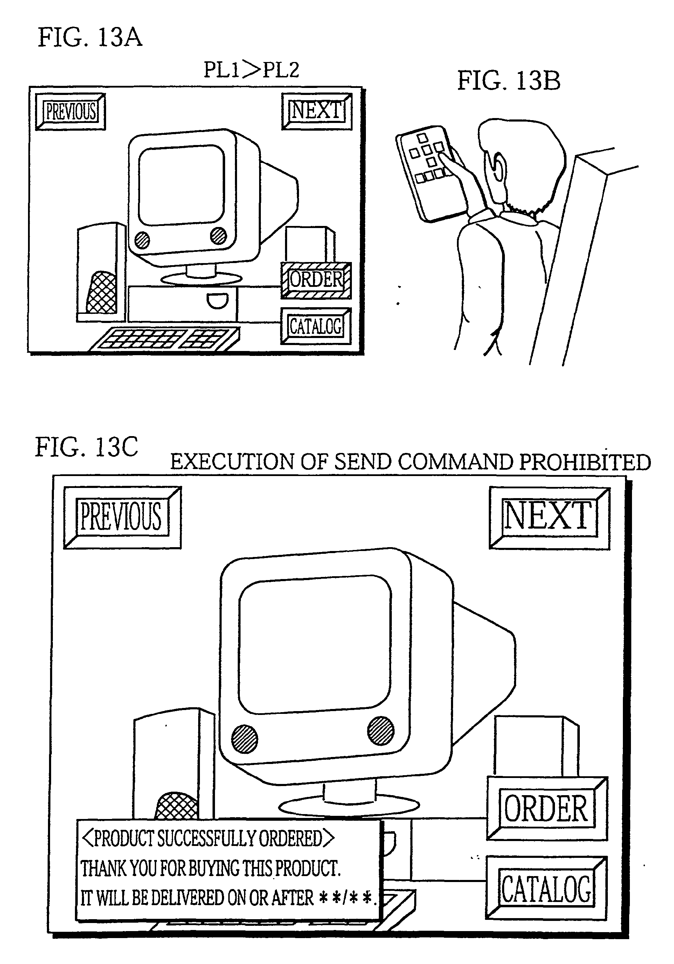

Figs. 13A to 13C correspond to Case 1 in Fig. 8A, and so show the case when User A operates the remote controller 23 to press the order button 12c.

In Fig. 13A, the shopping channel switching button 13c is in the selection state, and in Fig. 13B User A uses the remote controller 23 to confirm the selection of this button. Since User A is present, the execution permission judging information is set at the highest parental level "7", as shown in Fig. 8A. As a result, even if the execution condition information of the button data is "7", this will still be within the execution permission judging information, so that the product can be ordered as a result of the corresponding control command. As shown in Fig. 13C, a message confirming that the order has been sent is then displayed.

In the above embodiment, a control command written in a set of button data is not executed as soon as the user selects the button. First, the control unit 5 compares the execution condition information given in the button data with the execution permission judging information in the non-volatile memory 4 and performs a judgement to see whether the execution of the control command is permitted. By doing so, it is possible to prevent orders from being made by other persons against the wishes of the authorized person.

### Second Embodiment

In the first embodiment, the product ordering indications made when the internal settings of the reproduction apparatus 21 do not satisfy the execution condition information are instantly rejected. In this second embodiment, meanwhile, such product ordering indications are stored and may be later approved by the authorized person.

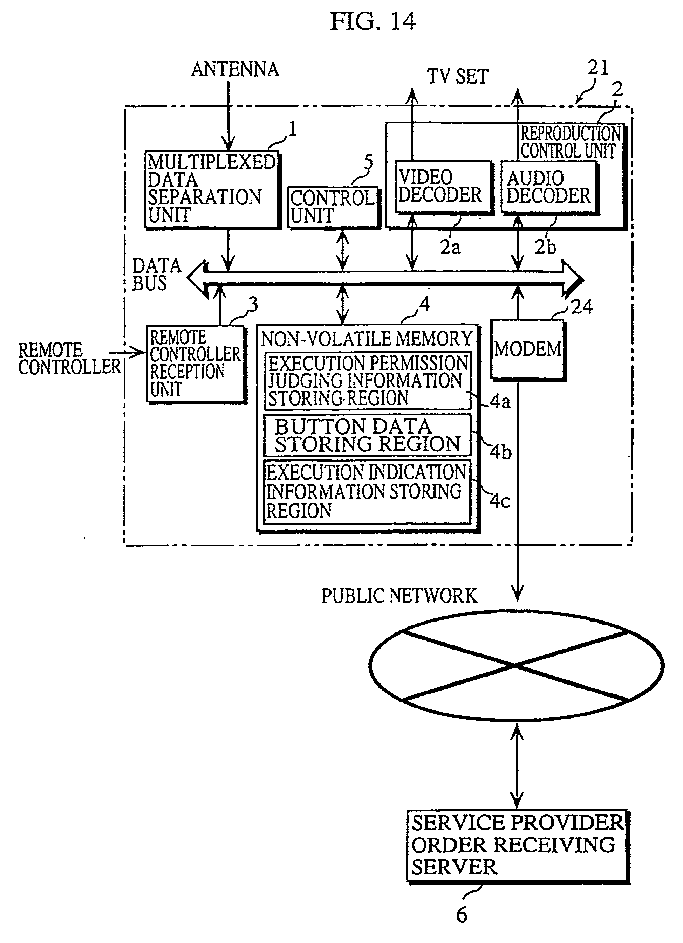

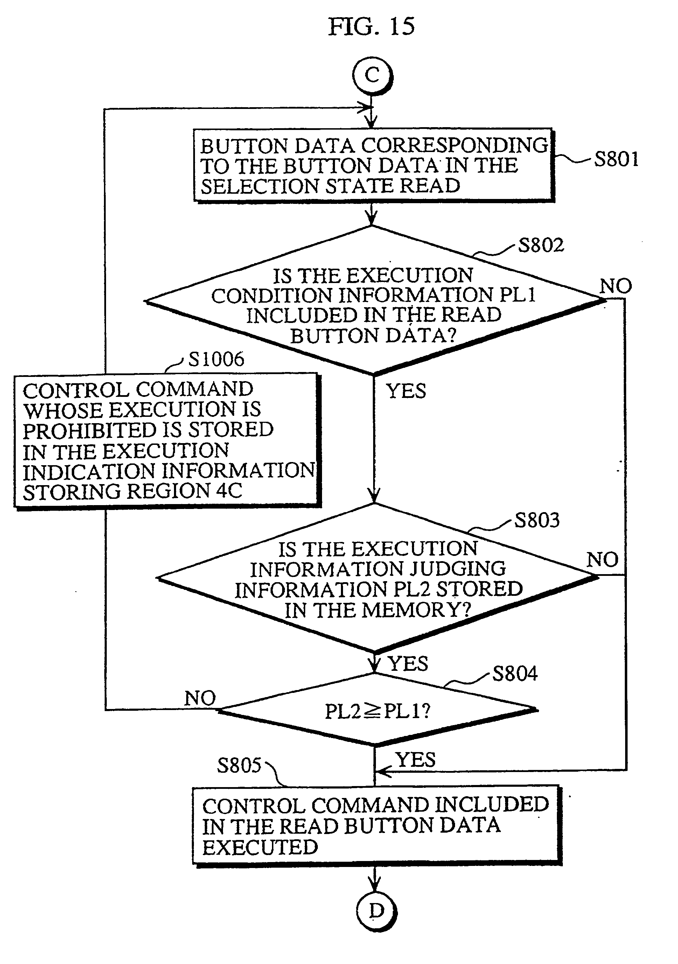

Fig. 14 shows the construction of a reproduction apparatus 21 that is capable of storing product ordering indications for later approval. The reproduction apparatus 21 shown in Fig. 14 differs from that of the first embodiment in that the non-volatile memory 4 further includes an execution indication information storing region 4c. The processing of the control unit 5 when the user has pressed a button is also different, as shown in Fig. 15. The flowchart in Fig. 15 differs from that of Fig. 10 in that step S1006 has been newly added.

When, in the flowchart in Fig. 10, the internal settings of the reproduction apparatus 21 do not satisfy the execution condition information, the control command included in the button data subjected to a selection operation was simply not executed. In the flowchart of Fig. 15, however, when the pressed button whose control command cannot be executed is the order button 12c, details of the pressing of the order button 12c are stored as a "product ordering indication" in the execution indication information storing region 4c. If such product ordering indications are stored in the execution indication information storing region 4c, the authorized person is then able to later judge whether the products indicated by the stored control commands should be ordered.

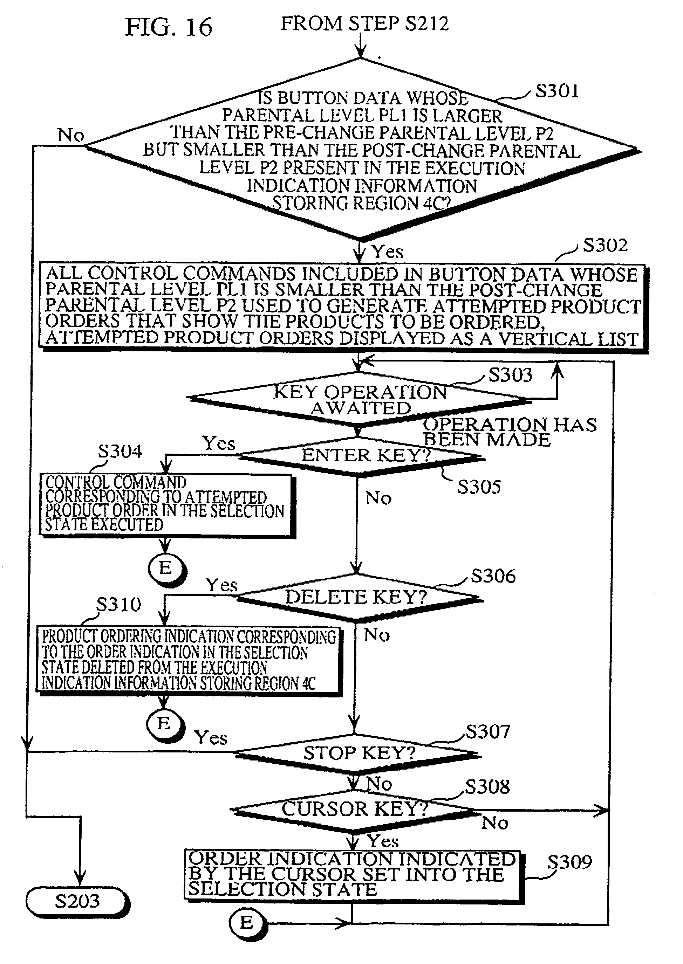

In the first embodiment, the processing returns to step S203 after the execution permission judging information (parental level PL2) has been changed in step S212, while in the second embodiment, the processing proceeds to step S301 after the processing in step S212. Fig. 16 is a flowchart showing the processing of the control unit 5 when confirming the stored control commands.

In step S301, the control unit 5 judges whether button data with a parental level PL1 that is higher than the parental level PL2 before changing but equal to or lower than the parental level PL2 after changing is present in the execution indication information storing region 4c. In step S302, the control unit 5 generates a plurality of attempted product orders showing the attempted ordering operations based on the control commands of sets of button data whose parental level PL1 is lower than the parental level PL2 after changing. The control unit 5 has these attempted product orders displayed as a vertical list. After this, the control unit 5 advances to step S303 and waits for a key operation to be made.

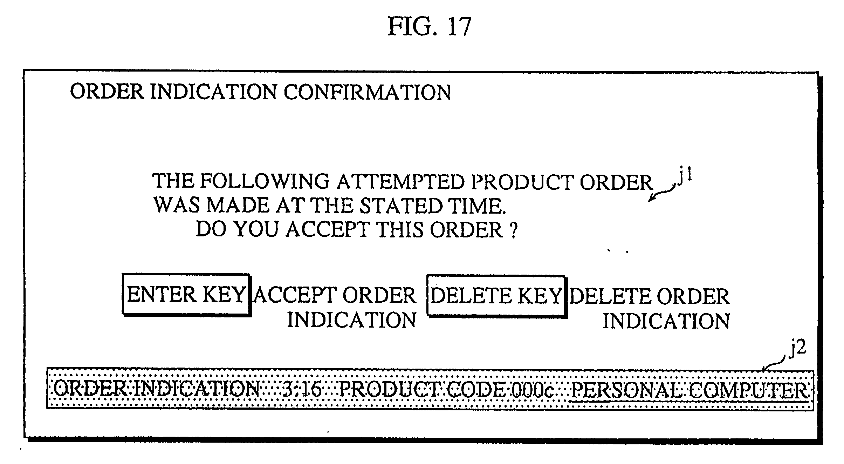

Fig. 17 shows the display content when the authorized person is asked to approve an attempted product order. When the processing of the control unit 5 in the flowchart of Fig. 16 advances to step S302, the reproduction apparatus 21 displays the message "THE FOLLOWING ATTEMPTED PRODUCT ORDER WAS MADE AT THE STATED TIME. DO YOU ACCEPT THIS ORDER?" on the TV set 22, as shown by arrow jl in Fig. 17. The control unit 5 reads the button data stored in the execution indication information storing region 4c and the time at which the execution of the control command of the button data was attempted. Here, the read button data includes the Send command "Send 'IDc'+Server_TEL_NO." for ordering the product with the product code "IDc", so that the product code "IDc" is converted to the product name "Personal Computer" which is then displayed with the read information as an attempted product order, as shown by the arrow j2.

When a key operation is made, the control unit 5 judges in steps S305 to S308 whether the pressed key was respectively the Enter key, the Delete key, the Stop key, or one of the cursor keys. If the pressed key is one of the cursor keys, the attempted product order that is indicated by the cursor key operation is set into the selection state in step S309, before the processing returns to step S303 where a key operation is awaited once more. By changing the attempted product order that is in the selection state in step S309, the authorized person is able to set his/her desired attempted product order into the selection state.

When the authorized person has pressed the Enter key, the control unit 5 judges "Yes" in step S305 and the processing advances to step S304 where the control command corresponding to the attempted product order in the selection state is executed.

When the authorized person has pressed the Delete key, the control unit 5 judges "Yes" in step S306 and the processing advances to step S310 where the product ordering indication corresponding to the attempted product order in the selection state is deleted from the execution indication information storing region 4c.

When the authorized person has pressed the Stop key, the control unit 5 judges "Yes" in step S307 and the processing in this flowchart ends.

For the display content in Fig. 17, if the user presses the Enter key, the attempted product order will be approved and the Send command described above will be sent to the service provider order receiving server 6.

With the present embodiment, when a judgement results in the execution of a control command not being performed, a product ordering indication can be temporarily stored to allow the authorized person to judge whether the product should be ordered. As one example, this means that products ordered by children may be monitored by their parents who can then order and pay for only the products they approve of.

### Third Embodiment

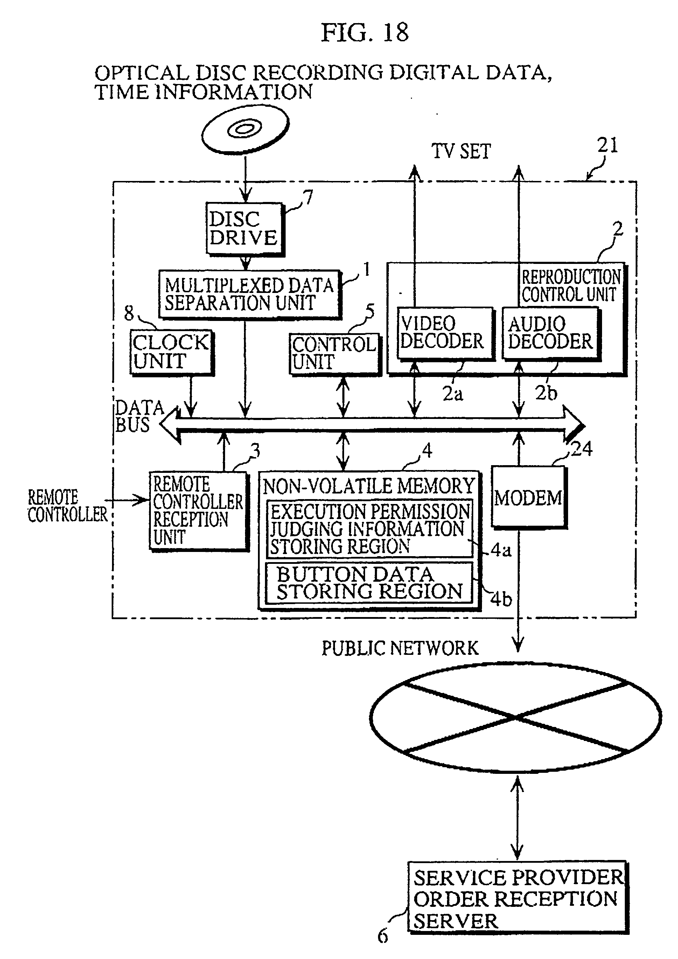

In the first and second embodiments, online shopping is performed using a broadcast wave, though in this third embodiment online shopping is performed using an optical disc. Fig. 18 shows the internal configuration of the reproduction apparatus 21 in this third embodiment. As shown in the drawing, the reproduction apparatus 21 includes the disc drive 7 for loading an optical disc and the clock unit 8 for measuring the present time. The disc drive 7 reads digital data recorded on the optical disc using an optical pickup.

In addition to the digital data described in the first embodiment, the optical disc also records time information. This time information shows the sale period for each product, which is to be compared with the present time measured by the clock unit 8 provided in the reproduction apparatus 21. When the present time measured by the clock unit 8 is within the sale period in the time information, the execution permission judging information is set as "execution permitted". Conversely, when the present time measured by the clock unit 8 is outside the sale period in the time information, execution of the control commands corresponding to the button data is prohibited no matter what execution permission judging information is stored in the execution permission judging information storing region 4a.

This means that in addition to checking the execution permission judging information against the execution condition information during the sale period of a product to judge whether execution of a control command is permitted, the control unit 5 unconditionally prohibits the execution of all control commands outside the sale period.

With the present embodiment, when an authorized person has obtained an optical disc but the sale period of a product on the optical disc has ended, the screen for ordering the product will not be mistakenly displayed when reproducing the digital data recorded on the optical disc.

### Fourth Embodiment

The fourth embodiment is a modification of the first and second embodiments where the sets of button data do not include execution condition information. In this fourth embodiment, the evaluation function f(x) is used for each set of button data in place of the execution condition information provided for each set of button data.

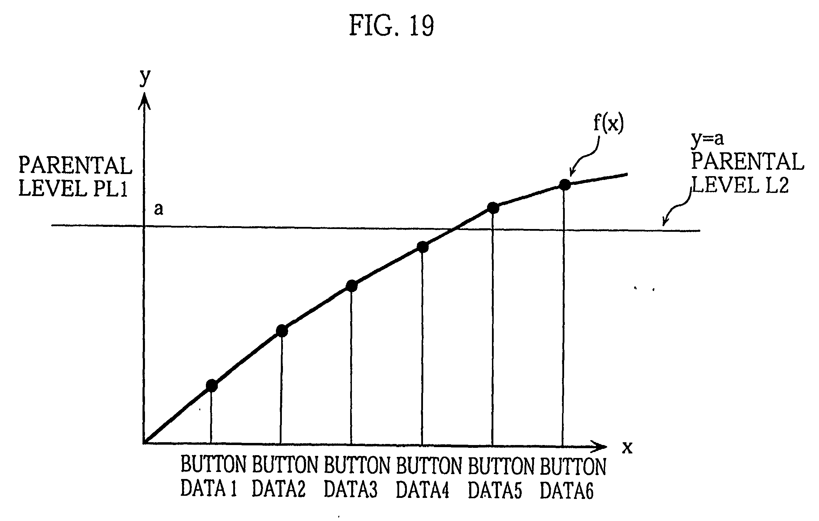

Fig. 19 is a graph showing an example of an evaluation function f(x). In Fig. 19, the button numbers have been shown as the x axis, while the output values y of the evaluation f(x) have been shown as the y axis. In this case, sets of button data with higher button numbers correspond to higher output values. This output value is the parental level PL1, and the straight line y=a shows the parental level PL2 that is stored as the execution permission judging information.

As shown in Fig. 19, the output value y of the evaluation function f(x) corresponds to the parental level PL1, so that on detecting that a button has been pressed, the control unit 5 in the fourth embodiment calculates the function y=f(x) with the button number of the detected button as the variable x. After this, the control unit 5 checks whether the output value y of the calculated function is above the parental level PL2. By calculating the evaluation function f(x) with the button number of the detected button as the variable x, the control unit 5 can judge whether the execution of the control command associated to the detected button is permitted or prohibited.

With this fourth embodiment, if evaluation function information that shows the evaluation function for sets of button data is transmitted, the reproduction apparatus 21 will then be able to calculate the output value of the evaluation function and so judge whether the execution of control commands is permitted or prohibited. By doing so, execution condition information does not need to be provided for each set of button data, so that the total amount of data to be transmitted can be reduced. By setting the evaluation function in advance, the total amount of data to be transmitted can be further reduced.

The present invention has been explained with reference to the above four embodiments, though these embodiments merely explain potential systems that are presently expected to be of use. It should be remembered that modifications of these embodiments are possible without departing from the scope of the invention. Modifications (a), (b), (c), ... are given as examples below.
(a) The execution permission judging information storing region 4a, button data storing region 4b, and execution indication information storing region 4c were described as being provided in a non-volatile memory, though provided the storage of information can be maintained even when the power supply to the reproduction apparatus 21 is cut off, an EEPROM (Electrically Erasable Programmable Read Only Memory), a hard disk drive, or a rewritable optical disc drive and disc may be used.
(b) The objects were described as including video information, audio information, and button data, although a control program and character information may also be included. Each set of button data was also described as including a button image, although one set of button data may include a plurality of button images.
(c) Each set of button data was described as including a display time, a display position, a control command, and execution condition information, although other information, such as a button surface display image, button coloring information, and a button display control program may also be included.
(d) The video information was described as including video data under MPEG2 format, although any kind of images for displaying the products on sale may be used. As another example of a video data format, MPEG1 may be used, as may still image formats such as JPEG (Joint Photographic Experts Group) or GIF (Graphics Interchange Format). The video information may also include plaintext, or other data such as document data that was produced using an editor application and has been converted for display use.
   The display method for video information in the digital data, the display method for button images, the format of control commands related to image display, and the format of the control command for issuing a product order may all be given according to a markup language, such as HTML (Hypertext Markup Language) or XML (eXtensible Markup Language).
(e) The audio information was described as including audio that had been compressed according to LPCM, although any kind of audio may be used to describe the products on sale. As examples, MPEG-Audio or AC3 format may be used.
(f) In the first, second, and fourth embodiments, a broadcast wave is used to transmit the digital data to the reproduction apparatus 21, although the digital data may be transmitted to the reproduction apparatus 21 via a public network like an ISDN (Integrated Services Digital Network) or PSTN (Public Switched Telephone Network), or a private network such as an Ethernet. It should be obvious that such network may be wired, using optical fibers or the like, or wireless.
(g) The digital data may be recorded onto a rewritable medium, as in the third embodiment, and digital data that has previously been recorded onto the medium may be updated using digital data received by a reception unit. By doing so, time information may be updated when the sale period ends.
(h) The execution condition information was described using one of eight possible parental levels, though other information may be used, such as any combination of one of more of (1) time information, operation history information, and/or region code information stored by the reproduction apparatus, (2) a previously set credit limit, and/or (3) a program written in a programming language.
(i) The embodiments describe a case where the input of a PIN is required to change the limitation information, although any method for confirming that the user is the authorized person may be used. As examples, a physical key or fingerprint recognition may be used.
(j) In the third embodiment, the optical disc used for storing the digital data was described as being a CD-ROM disc, although a DVD-ROM (Digital Versatile Disc Read Only Memory) or MO (Magneto-Optical) disc may be used.
(k) The procedures executed by the control unit 5 in the first to fourth embodiments that were described by means of the flowcharts in Figs. 9, 10, 15, and 16 may be realized by a machine language program. Such machine language program may be recorded onto a storage medium and distributed and sold. This storage medium may be an IC (Integrated Circuit) card, an optical disc, or a floppy disc, for example, with the program recorded onto the storage medium being used after first being installed into a standard computer. By executing the installed program, the standard computer can achieve the functions of the first to four embodiments.

Although the present invention has been fully described by way of example with reference to accompanying drawings, it is to be noted that various changes and modifications will be apparent to those skilled in the art. Therefore, unless such changes and modifications depart from scope of the present invention, they should be constructed as being include therein.

## Claims

1. A reproduction apparatus reproducing digital data supplied by a business, wherein the digital data includes sets of video information relating to a plurality of video images (71-74), and sets of button data corresponding to a plurality of button images to be arranged on each of the video images,
each set of button data including a control command to be executed when the button image corresponding to the set of button data is indicated,
one of a plurality of control commands being for instructing the reproduction apparatus to transmit a product order to the business,
the reproduction apparatus comprising:
reproducing means (2) for displaying each of the video images based on the sets of video information, and arranging the plurality of button images on each of the video images based on the sets of button data; and
first receiving means (3) for receiving a user operation from a user;
**characterised in that**
each set of button data further comprises information from which is derivable an execution condition level,
the execution condition level derivable from the information included in the same set of button data as the control command setting an execution condition according to an importance of the product order, and
the reproduction apparatus further comprises:
storage means (4) including a storage region (4a) storing a permitted level that shows an extent to which user operations are permitted;
permitting means for judging, when the user operation received by the first receiving means indicates one of the plurality of button images, whether the execution condition level derivable from the set of button data corresponding to the button image is within the permitted level; and
executing means for executing the control command only when the permitting means judges the execution condition level to be within the permitted level.

2. The reproduction apparatus of Claim 1,wherein the storage region (4a) in the storage means (4) is locked in a non-rewritable state, the reproduction apparatus further comprising:
judging means for judging whether the user is authorised when the user operation received by the first receiving means (3) is a rewriting operation of the storage region (4a);
second receiving means for unlocking the storage region (4a) when the judging means has judged that the user is authorised, and receiving a user operation setting a new permitted level; and
writing means for writing the new permitted level into the storage region (4a) when the second receiving means has received the user operation setting the new permitted level, and then returning the storage region to a locked state.

3. The reproduction apparatus of Claim 2, wherein the judging means includes:
a receiving unit for receiving an input of a personal identification number (PIN) from the user when the user operation received by the first receiving means (3) is a rewriting operation of the storage region (4a); and
a PIN judging unit for judging whether the user is authorised when the inputted PIN is correct.

4. The reproduction apparatus of Claim 1, wherein one of the plurality of control commands is for instructing the reproduction apparatus to switch a displayed image, the execution condition level derivable from the same set of button data as the control command being set at a lower level than the level of importance of the product order,
the permitting means judging, when the control command included in the set of button data indicated by the user operation relates to reproducing the digital data, whether the execution condition level is within the permitted level,
the reproduction apparatus further comprising:
reproduction control means for having the reproducing means switch the displayed image only when the permitting means has judged that the execution level is within the permitted level.

5. The reproduction apparatus of Claim 4, wherein an importance of a control command is expressed as a level PL1 out of n possible values, where n≥2, the execution condition level derivable from the set of button data including the control command includes the level PL1,and the permitted level is expressed as a level PL2 out of n possible values,
the permitting means judging whether the level PL1 derivable from the set of button data corresponding to the button image indicated by the user operation is within the permitted level PL2 stored in the storage region (4a).

6. The reproduction apparatus of Claim 1, wherein an evaluation function f(x) is assigned to the digital data, the execution condition level derivable from the set of button data being an output value y obtained by applying an identification number x of each set of button data to the evaluation function f(x), and the permitted level being a threshold for the output value of the evaluation function f(x),
the permitting means judging whether the output value y of the evaluation function f(x) is within the threshold shown by the permitted level.

7. The reproduction apparatus of Claim 3, further comprising holding means for holding a control command attached to a button image indicated by a user operation when the permitting means judges that the execution condition level exceeds the permitted level;
display means for generating and displaying a list showing a product order by a control command when the judging means judges that the user is authorised and a new permitted level of a higher value has been written into the storage region (4a); and
third receiving means for receiving an operation from the user approving an execution of the control command after the product order list has been displayed;
the executing means executing the control command only when the control command has been approved by the user and the permitting means judges the execution condition level to be within the new permitted level.

8. The reproduction apparatus of Claim 7, wherein the first receiving means (3) receives an operation to delete a control command, the reproduction apparatus further comprising:
deletion means for deleting the control command held by the holding means when the first receiving means has received a deleting operation.

9. The reproduction apparatus of Claim 1, wherein the digital data is transmitted by the business using a broadcast wave (1101), the reproduction apparatus further comprising:
broadcast receiving means (1102, 1104) for receiving the broadcast wave and separating the digital data from the broadcast wave;
the reproducing means reproducing the separated digital data.

10. The reproduction apparatus of Claim 1, wherein the digital data is transmitted from the business on a network, the reproduction apparatus further comprising:
downloading means for downloading the digital data transmitted on the network;
the reproducing means reproducing the downloaded digital data.

11. The reproduction apparatus of Claim 1, wherein the digital data is stored on a storage medium and distributed by the business, the reproduction apparatus further comprising:
reading means (7) for loading the storage medium and reading the digital data stored on the storage medium;
the reproducing means reproducing the read digital data.

12. The reproduction apparatus of Claim 11, wherein time information showing a valid period for the digital data is stored on the storage medium, the reproduction apparatus further comprising:
a clock unit (8) for measuring a present time; and
changing means for reading the time information stored on the storage medium, comparing the period indicated thereby with the present time measured by the clock unit, and then prohibiting the execution of all control commands relating to the digital data if the present time is outside the indicated period.

13. A storage medium storing in computer-readable format a program for having a computer reproduce digital data supplied by a business, wherein the digital data includes sets of video information relating to a plurality of video images, and sets of button data corresponding to a plurality of button images to be arranged on each of the video images,
each set of button data including a control command to be executed when a corresponding button image is indicated, and information from which is derivable an execution condition level, and
one of the plurality of control commands being for instructing the reproduction apparatus to transmit a product order to the business, the execution condition level derivable from the same set of button data as the control command setting an execution condition according to an importance of the product order,
the program comprising:
a reproducing step for displaying each of the video images based on the sets of video information, and arranging the plurality of button images on each of the video images based on the sets of button data;
a first receiving step for receiving a user operation from a user and deriving the execution condition level from the set of button data corresponding to a button image indicated by the received user operation;
a permitting step for reading a permitted level PL2 that shows an extent to which user operations are permitted, and is stored in a storage region (4a) included in a storage means (4) of the computer, and judging when the user operation received by the first receiving step indicates one of the plurality of button images, whether the derived execution condition is within the permitted level; and
an executing step for executing the control command only when the permitting step judges the execution condition level to be within the permitted level.

14. The storage medium of Claim 13, wherein the storage region (4a) is locked in a non-rewritable state, the program further comprising:
a judging step for judging whether the user is authorised when the user operation received by the first receiving step is a rewriting operation of the storage region;
a second receiving step for unlocking the storage region (4a) when the judging step has judged that the user is authorised, and receiving a user operation setting a new permitted level; and
a writing step for writing the new permitted level into the storage region when the second receiving step has received the user operation setting the new permitted level, and then returning the storage region to a locked state.

15. The storage medium of Claim 14, wherein the judging step includes:
a receiving substep for receiving an input of a personal identification number (PIN) from the user when the user operation received by the first receiving step is a rewriting operation of the storage region (4a); and
a PIN judging substep for judging whether the user is authorised when the inputted PIN is correct.

16. The storage medium of Claim 13, wherein one of the plurality of control commands is for instructing the reproduction apparatus to switch a displayed image, the execution condition level derivable from the same set of button data as the control command being set at a lower level than the level of importance of the product order,
the permitting step judging, when the control command included in the set of button data indicated by the user operation relates to reproducing the digital data, whether the execution condition level is within the permitted level,
the program further comprising:
a reproduction control step for having the reproducing step switch the displayed image only when the permitting step has judged that the execution condition level is within the permitted level.

17. The storage medium of Claim 16, wherein an importance of a control command is expressed as a level PL1 out of n possible values, where n≥2, the execution condition level derivable from the set of button data including the control command, and the permitted level is expressed as a level PL2 out of n possible values,
the permitting step judging whether the level PL1 derivable from the set of button data corresponding to the button image indicated by the user operation is within the permitted level PL2 stored in the storage region (4a).

18. The storage medium of Claim 13, wherein an evaluation function f(x) is assigned to the digital data, the execution condition level derivable from the set of button data being an output value y obtained by applying an identification number x of each set of button data to the evaluation function f(x), and the permitted level being a threshold for the output value of the evaluation function f(x),
the permitting step judging whether the output value y of the evaluation function f(x) is within the threshold shown by the permitted level.

19. The storage medium of Claim 15, the program further comprising:
a holding step for holding a control command attached to a button image indicated by a user operation when the permitting step judges that the execution level exceeds the permitted level;
a display step for generating and displaying a list showing a product order by a control command when the judging step judges that the user is authorised and a new permitted level of a higher value has been written into the storage region (4a); and
a third receiving step for receiving an operation from the user approving an execution of the control command after the product order list has been displayed;
the executing step executing the control command only when the control command has been approved by the user and the permitting step judges the execution condition level to be within the new permitted level.

20. The storage medium of Claim 19, wherein the first receiving step receives an operation to delete a control command, the program further comprising:
a deletion step for deleing the control command held by the holding step when the first receiving step has received a deleting operation.

## Patentansprüche

1. Wiedergabevorrichtung, die durch ein Unternehmen bereitgestellte digitale Daten wiedergibt, wobei die digitalen Daten Sätze von Videoinformationen, die sich auf eine Vielzahl von Videobildern beziehen (71 bis 74), und Sätze von Schaltfelddaten enthalten, die einer Vielzahl von Schaltfeldbildern entsprechen, die auf jedem der Videobilder anzuordnen sind,
jeder Satz von Schaltfelddaten einen Steuerbefehl enthält, der auszuführen ist, wenn das Schaltfeldbild, das dem Satz von Schaltfelddaten entspricht, angezeigt wird,
einer aus einer Vielzahl von Befehlen dafür ist, die Wiedergabevorrichtung anzuweisen, eine Produktbestellung zu dem Unternehmen zu senden,
die Wiedergabevorrichtung umfasst:
eine Wiedergabeeinrichtung (2) zum Anzeigen jedes der Videobilder auf Basis der Sätze von Videoinformationen und zum Anordnen der Vielzahl von Schaltflächenbildern auf jedem der Videobilder auf Basis der Sätze von Schaltfelddaten und
eine erste Empfangseinrichtung (3) zum Empfangen einer Benutzerbetätigung von einem Benutzer,
**dadurch gekennzeichnet, dass**
jeder Satz von Schaltfelddaten des Weiteren Informationen umfasst, aus denen eine Ausführungsbedingungsebene abgeleitet werden kann,
die Ausführungsbedingungsebene, die aus den Informationen, die in demselben Satz von Schaltfelddaten wie der Steuerbefehl enthalten sind, abgeleitet werden kann, eine Ausführungsbedingung entsprechend der Wichtigkeit der Produktbestellung einstellt und
die Wiedergabevorrichtung des Weiteren umfasst:
eine Speichereinrichtung (4), die einen Speicherbereich (4a) enthält, der eine zugelassene Ebene speichert, die ein Ausmaß zeigt, in dem Benutzerbetätigungen zugelassen sind,
eine Zulassungseinrichtung zum Feststellen, wenn die durch die erste Empfangseinrichtung empfangene Benutzerbetätigung eines aus der Vielzahl von Schaltfeldbildern anzeigt, ob die Ausführungsbedingungsebene, die aus dem Satz von Schaltflächendaten, der dem Schaltfeldbild entspricht, abgeleitet werden kann, innerhalb der zugelassenen Ebene ist, und
eine Ausführungseinrichtung zum Ausführen des Steuerbefehls nur dann, wenn die Zulassungseinrichtung feststellt, dass die Ausführungsbedingungsebene innerhalb der zugelassenen Ebene ist.

2. Wiedergabevorrichtung nach Anspruch 1, wobei der Speicherbereich (4a) in der Speichereinrichtung (4) in einem gesperrten Zustand ist, in dem er nicht neu beschrieben werden kann, und die Wiedergabevorrichtung des Weiteren umfasst:
eine Feststellungseinrichtung zum Feststellen, ob der Benutzer autorisiert ist, wenn die durch die erste Empfangseinrichtung (3) empfangene Benutzerbetätigung eine Betätigung zum Neuschreiben des Speicherbereichs (4a) ist,
eine zweite Empfangseinrichtung zum Entsperren des Speicherbereichs (4a), wenn die Feststellungseinrichtung festgestellt hat, dass der Benutzer autorisiert ist, und zum Empfangen einer Benutzerbetätigung, die eine neue zugelassene Ebene einstellt, und
eine Schreibeinrichtung zum Schreiben der neuen zugelassenen Ebene in den Speicherbereich (4a), wenn die zweite Empfangseinrichtung die Benutzerbetätigung, die die neue zugelassene Ebene einstellt, empfangen hat, und zum anschließenden Zurücksetzen des Speicherbereichs in einen gesperrten Zustand.

3. Wiedergabevorrichtung nach Anspruch 2, wobei die Feststellungseinrichtung enthält:
eine Empfangseinheit zum Empfangen einer Eingabe einer persönlichen Geheimzahl (PIN) von dem Benutzer, wenn die durch die erste Empfangseinrichtung (3) empfangene Benutzerbetätigung eine Betätigung zum Neuschreiben des Speicherbereichs (4a) ist, und
eine PIN-Feststellungseinheit zum Feststellen, ob der Benutzer autorisiert ist, wenn die PIN richtig ist.

4. Wiedergabevorrichtung nach Anspruch 1, wobei einer aus der Vielzahl von Steuerbefehlen dafür ist, die Wiedergabevorrichtung anzuweisen, ein Anzeigebild zu wechseln, wobei die Ausführungsbedingungsebene, die von demselben Satz von Schaltflächendaten wie der Steuerbefehl abgeleitet werden kann, auf eine niedrigere Ebene als die Ebene der Wichtigkeit der Produktbestellung eingestellt ist, und
die Zulassungseinrichtung feststellt, wenn sich der Steuerbefehl, der in dem durch die Benutzerbetätigung angezeigten Satz von Schaltflächendaten enthalten ist, auf die Wiedergabe der digitalen Daten bezieht, ob die Ausführungsbedingungsebene innerhalb der zugelassenen Ebene ist,
wobei die Wiedergabevorrichtung des Weiteren umfasst:
eine Wiedergabesteuereinrichtung zum Bewirken, dass die Wiedergabevorrichtung das angezeigte Bild nur dann wechselt, wenn die Zulassungseinrichtung festgestellt hat, dass die Ausführungsebene innerhalb der zugelassenen Ebene ist.

5. Wiedergabevorrichtung nach Anspruch 4, wobei eine Wichtigkeit eines Steuerbefehls als eine Ebene PL1 unter n möglichen Werten ausgedrückt wird, wobei *n* ≤ 2 ist, die Ausführungsbedingungsebene, die aus dem Satz von Schaltflächendaten, der den Steuerbefehl enthält, abgeleitet werden kann, die Ebene PL1 enthält und die zugelassene Ebene als eine Ebene PL2 unter n möglichen Werten ausgedrückt wird und
die Zulassungseinrichtung feststellt, ob die Ebene PL1, die von dem Satz von Schaltflächendaten abgeleitet werden kann, der dem durch die Benutzerbetätigung angezeigten Schaltflächenbild entspricht, innerhalb der zugelassenen Ebene PL2 ist, die in dem Speicherbereich (4a) gespeichert ist.

6. Wiedergabevorrichtung nach Anspruch 1, wobei den digitalen Daten eine Evaluationsfunktion f(x) zugeordnet ist, die Ausführungsbedingungsebene, die aus dem Satz von Schaltflächendaten abgeleitet werden kann, ein Ausgabewert y ist, der erhalten wird, indem eine Identifikationsnummer x jedes Satzes von Schaltflächendaten auf die Evaluationsfunktion f(x) angewendet wird und die zugelassene Ebene ein Schwellenwert für den Ausgabewert der Evaluationsfunktion f(x) ist,
wobei die Zulassungseinrichtung feststellt, ob der Ausgabewert y der Evaluationsfunktion f(x) innerhalb des Schwellenwertes ist, der durch die zugelassene Ebene gezeigt wird.

7. Wiedergabevorrichtung nach Anspruch 3, des Weiteren umfassend: eine Halteeinrichtung zum Halten eines Steuerbefehls, der an dem Schaltfeldbild angebracht ist, das durch eine Benutzerbetätigung angezeigt wird, wenn die Zulassungseinrichtung feststellt, dass die Ausführungsbedingungsebene die zugelassene Ebene übersteigt,
eine Anzeigeeinrichtung zum Erzeugen und Anzeigen einer Liste, die eine Produktbestellung durch einen Steuerbefehl zeigt, wenn die Feststellungseinrichtung feststellt, dass der Benutzer autorisiert ist und eine neue zugelassene Ebene in den Speicherbereich (4a) geschrieben worden ist,
eine dritte Empfangseinrichtung zum Empfangen einer Betätigung von dem Benutzer, die eine Ausführung des Steuerbefehls genehmigt, nachdem die Produktbestellungsliste angezeigt worden ist,
wobei die Ausführungseinrichtung den Steuerbefehl nur dann ausführt, wenn der Steuerbefehl durch den Benutzer genehmigt worden ist und die Zulassungseinrichtung feststellt, dass die Ausführungsbedingungsebene innerhalb der neu zugelassenen Ebene ist.

8. Wiedergabevorrichtung nach Anspruch 7, wobei die erste Empfangseinrichtung (3) eine Betätigung zum Löschen eines Steuerbefehls empfängt und die Wiedergabevorrichtung des Weiteren umfasst:
eine Löscheinrichtung zum Löschen eines Steuerbefehls, der durch die Halteeinrichtung gehalten wird, wenn die erste Empfangseinrichtung eine Löschbetätigung empfangen hat.

9. Wiedergabevorrichtung nach Anspruch 1, wobei die digitalen Daten durch das Unternehmen unter Nutzung einer Rundfunkwelle (1101) gesendet werden und die Wiedergabevorrichtung des Weiteren umfasst:
Funkempfangseinrichtungen (1102, 1104) zum Empfangen der Rundfunkwelle und zum Trennen der digitalen Daten aus der Rundfunkwelle,
wobei die Wiedergabevorrichtung die abgetrennten digitalen Daten wiedergibt.

10. Wiedergabevorrichtung nach Anspruch 1, wobei die digitalen Daten von dem Unternehmen auf einem Netzwerk gesendet werden und die Wiedergabevorrichtung des Weiteren umfasst:
eine Einrichtung zum Herunterladen der auf dem Netzwerk gesendeten digitalen Daten,
wobei die Wiedergabevorrichtung die heruntergeladenen digitalen Daten wiedergibt.

11. Wiedergabevorrichtung nach Anspruch 1, wobei die digitalen Daten auf einem Speichermedium gespeichert werden und durch das Unternehmen verteilt werden und die Wiedergabevorrichtung des Weiteren umfasst:
eine Leseeinrichtung (7) zum Laden des Speichermediums und zum Auslesen der auf dem Speichermedium gespeicherten digitalen Daten,
wobei die Wiedergabevorrichtung die ausgelesenen digitalen Daten wiedergibt.

12. Wiedergabevorrichtung nach Anspruch 11, wobei Zeitinformationen, die einen Gültigkeitszeitraum für die digitalen Daten zeigt, auf dem Speichermedium gespeichert ist und die Wiedergabevorrichtung des Weiteren umfasst:
eine Zeitnehmereinheit (8) zum Messen einer präsenten Zeit und
eine Änderungseinrichtung zum Auslesen der auf dem Speichermedium gespeicherten Zeitinformationen, Vergleichen des **dadurch** angezeigten Zeitraums mit der durch die Zeitnehmereinheit gemessenen Zeit und zum anschließenden Unterdrücken der Ausführung aller sich auf die digitalen Daten beziehenden Steuerbefehle, wenn die präsente Zeit außerhalb des angezeigten Zeitraums ist.

13. Speichermedium, das in einem computerlesbaren Format ein Programm speichert, das bewirkt, dass ein Computer von einem Unternehmen zugeführte digitale Daten wiedergibt, wobei die digitalen Daten Sätze von Videoinformationen, die sich auf eine Vielzahl von Videobildern beziehen, und Sätze von Schaltflächendaten enthalten, die einer Vielzahl von Schaltflächenbildern entsprechen, die auf jedem der Videobilder anzuordnen sind, jeder Satz von Schaltflächendaten einen Steuerbefehl, der auszuführen ist, wenn ein entsprechendes Schaltflächenbild angezeigt wird, und Informationen enthält, aus denen eine Ausführungsbedingungsebene abgeleitet werden kann, und
einer aus der Vielzahl von Steuerbefehlen dafür ist, die Widergabevorrichtung anzuweisen eine Produktbestellung zu dem Unternehmen zu senden und wobei die Ausführungsbedingungsebene, die aus demselben Satz von Schaltflächendaten wie der Steuerbefehl abgeleitet werden kann, eine Ausführungsbedingung entsprechend einer Wichtigkeit der Produktbestellung einstellt,
das Programm umfasst:
einen Wiedergabeschritt zum Anzeigen jedes der Videobilder auf Basis der Sätze von Videoinformationen und zum Anordnen der Vielzahl von Schaltflächenbildern auf jedem der Videobilder auf Basis der Sätze von Schaltflächendaten,
einen ersten Empfangsschritt zum Empfangen einer Benutzerbetätigung von einem Benutzer und zum Ableiten der Ausführungsbedingungsebene aus dem Satz von Schaltflächendaten, die einem durch die empfangene Benutzerbetätigung angezeigten Schaltflächenbild entsprechen,
einen Zulassungsschritt zum Lesen einer zugelassenen Ebene PL2, die das Ausmaß, in dem Benutzerbetätigungen zugelassen sind, anzeigt und in einem in einer Speichereinrichtung (4) des Computers enthaltenen Speicherbereich (4a) gespeichert ist, und zum Feststellen, wenn die durch den ersten Empfangsschritt empfangene Benutzerbetätigung eines aus der Vielzahl von Schaltflächenbildern anzeigt, ob die abgeleitete Ausführungsbedingung innerhalb der zugelassenen Ebene ist, und
einen Ausführungsschritt zum Ausführen des Steuerbefehls nur dann, wenn der Zulassungsschritt die Ausführungsbedingungsebene als innerhalb der zugelassenen Ebene befindlich feststellt.

14. Speichermedium nach Anspruch 13, wobei der Speicherbereich (4a) in einen Zustand gesperrt ist, in dem er nicht neu beschrieben werden kann, und das Programm des Weiteren umfasst:
einen Feststellungsschritt zum Feststellen, ob der Benutzer autorisiert ist, wenn die durch den ersten Empfangsschritt empfangene Benutzerbetätigung eine Betätigung zum Neuschreiben des Speicherbereichs ist,
einen zweiten Empfangsschritt zum Entsperren des Speicherbereichs (4a), wenn der Feststellungsschritt festgestellt hat, dass der Benutzer autorisiert ist, und zum Empfangen einer Benutzerbetätigung zum Einstellen einer neuen zugelassenen Ebene und
einen Schreibschritt zum Schreiben der neuen zugelassenen Ebene in den Speicherbereich, wenn der zweite Empfangsschritt eine Benutzerbetätigung empfangen hat, die die neue zugelassene Ebene einstellt, und zum anschließenden Zurückversetzen des Speicherbereichs in einen gesperrten Zustand.

15. Speichermedium nach Anspruch 14, wobei der Feststellungsschritt enthält:
einen Empfangs-Unterschritt zum Empfangen einer Eingabe einer persönlichen Geheimzahl (PIN) von dem Benutzer, wenn die durch den ersten Empfangsschritt empfangene Benutzerbetätigung eine Betätigung zum Neuschreiben des Speicherbereichs (4a) ist, und
einen PIN-Feststellungsschritt zum Feststellen, ob der Benutzer autorisiert ist, wenn die eingegebene PIN richtig ist.

16. Speichermedium nach Anspruch 13, wobei einer aus der Vielzahl von Steuerbefehlen dafür ist, um die Wiedergabeeinrichtung anzuweisen, ein angezeigtes Bild zu wechseln, wobei die Ausführungsbedingungsebene, die von demselben Satz von Schaltflächendaten wie der Steuerbefehl abgeleitet werden kann, auf eine niedrigere Ebene als die Ebene der Wichtigkeit der Produktbestellung gesetzt ist,
der Zulassungsschritt feststellt, wenn der in dem durch die Benutzerbetätigung angezeigten Satz von Schaltflächendaten enthaltene Steuerbefehl sich auf die Wiedergabe der digitalen Daten bezieht, ob die Ausführungsbedingungsebene innerhalb der zugelassenen Ebene ist,
wobei das Programm des Weiteren umfasst:
einen Wiedergabesteuerschritt, der bewirkt, dass der Wiedergabeschritt das angezeigte Bild nur dann wechselt, wenn der Zulassungsschritt festgestellt hat, dass die Ausführungsbedingungsebene innerhalb der zugelassenen Ebene ist.

17. Speichermedium nach Anspruch 16, wobei eine Wichtigkeit eines Steuerbefehls als eine Ebene PL1 unter n möglichen Werten ausgedrückt wird, wobei *n* ≤ 2 ist, die Ausführungsbedingungsebene, die aus dem Satz von Schaltflächendaten, die den Steuerbefehl enthalten, abgeleitet werden kann und die zugelassene Ebene als eine Ebene PL2 unter n möglichen Werten ausgedrückt wird und
der Zulassungsschritt feststellt, ob die Ebene PL1, die aus dem Satz von Schaltflächendaten, die dem durch die Benutzerbetätigung angezeigten Schaltflächenbild entsprechen, abgeleitet werden kann, innerhalb der in dem Speicherbereich (4a) gespeicherten zugelassenen Ebene PL2 ist.

18. Speichermedium nach Anspruch 13, wobei eine Evaluationsfunktion f(x) den digitalen Daten zugeordnet ist, die Ausführungsbedingungsebene, die aus dem Satz von Schaltflächendaten abgeleitet werden kann, ein Ausgabewert y ist, der durch Anwendung einer Identifikationszahl x jedes Satzes von Schaltflächendaten auf die Evaluationsfunktion erhalten wird, und die zugelassene Ebene ein Schwellenwert für den Ausgabewert der Evaluationsfunktion f(x) ist, wobei
der Zulassungsschritt feststellt, ob der Ausgabewert y der Evaluationsfunktion f(x) innerhalb des durch die zugelassene Ebene gezeigten Schwellenwertes ist.

19. Speichermedium nach Anspruch 15, wobei das Programm des Weiteren umfasst:
einen Halteschritt zum Halten eines Steuerbefehls, der an einem Schaltflächenbild angebracht ist, das durch eine Benutzerbetätigung angezeigt wird, wenn der Zulassungsschritt feststellt, dass die Ausführungsebene die zugelassene Ebene übersteigt,
einen Anzeigeschritt zum Erzeugen und Anzeigen einer Liste, die durch einen Steuerbefehl eine Produktbestellung zeigt, wenn der Feststellungsschritt feststellt, dass der Benutzer autorisiert ist und eine neue zugelassene Ebene eines höheren Wertes in den Speicherbereich (4a) geschrieben worden ist, und
einen dritten Empfangsschritt zum Empfangen einer Betätigung von dem Benutzer, die eine Ausführung des Steuerbefehls genehmigt, nachdem die Produktbestellungsliste angezeigt worden ist,
wobei der Ausführungsschritt den Steuerbefehl nur dann ausführt, wenn der Steuerbefehl durch den Benutzer genehmigt wurde und der Zulassungsschritt die Ausführungsbedingungsebene als in der zugelassenen Ebene befindlich feststellt.

20. Speichermedium nach Anspruch 19, wobei der erste Empfangsschritt eine Betätigung zum Löschen eines Steuerbefehls empfängt und das Programm des Weiteren umfasst:
einen Löschschritt zum Löschen des durch den Halteschritt gehaltenen Steuerbefehls, wenn der erste Empfangsschritt eine Löschbetätigung empfangen hat.

## Revendications

1. Appareil de reproduction reproduisant des données numériques envoyées par une entreprise, dans lequel les données numériques comprennent des ensembles d'informations vidéo concernant une pluralité d'images vidéo (71-74), et des ensembles de données boutons correspondant à une pluralité d'images boutons à agencer sur chacune des images vidéo,
chaque ensemble de données boutons comprenant une commande de contrôle à exécuter lorsque l'image bouton correspondant à l'ensemble de données boutons est indiquée,
une commande d'une pluralité de commandes de contrôle étant destinée à donner à l'appareil de reproduction l'ordre de transmettre une commande produit à l'entreprise,
l'appareil de reproduction comprenant :
un moyen de reproduction (2) destiné à afficher chacune des images vidéo sur la base des ensembles d'informations vidéo, et à agencer la pluralité d'images boutons sur chacune des images vidéo sur la base des ensembles de données boutons ; et
un premier moyen de réception (3) destiné à recevoir une opération utilisateur provenant d'un utilisateur ;
**caractérisé en ce que**
chaque ensemble de données boutons comprend en outre des informations dont on peut dériver un niveau de condition d'exécution,
le niveau de condition d'exécution pouvant être dérivé des informations incluses dans le même ensemble de données boutons que la commande de contrôle établissant une condition d'exécution selon une importance de la commande de produit, et
l'appareil de reproduction comprend en outre :
un moyen de stockage (4) comprenant une région de stockage (4a) stockant un niveau autorisé qui montre une étendue dans laquelle sont autorisées des opérations utilisateur ;
un moyen d'autorisation destiné à juger, lorsque l'opération utilisateur reçue par le premier moyen de réception indique une image de la pluralité d'images boutons, si le niveau de condition d'exécution pouvant être dérivé de l'ensemble de données boutons correspondant à l'image bouton se trouve dans le niveau autorisé ; et
un moyen d'exécution destiné à exécuter la commande de contrôle uniquement lorsque le moyen d'autorisation juge que le niveau de condition d'exécution se trouve dans le niveau autorisé.

2. Appareil de reproduction selon la revendication 1, dans lequel la région de stockage (4a) dans le moyen de stockage (4) est verrouillée dans un état non réinscriptible, l'appareil de reproduction comprenant en outre :
un moyen de jugement destiné à juger si l'utilisateur est autorisé lorsque l'opération utilisateur reçue par le premier moyen de réception (3) est une opération de réécriture de la région de stockage (4a) ;
un deuxième moyen de réception destiné à déverrouiller la région de stockage (4a) lorsque le moyen de jugement a jugé que l'utilisateur est autorisé, et à recevoir une opération utilisateur établissant un nouveau niveau autorisé ; et
un moyen d'écriture destiné à écrire le nouveau niveau autorisé dans la région de stockage (4a) lorsque le deuxième moyen de réception a reçu l'opération utilisateur établissant le nouveau niveau autorisé, puis à ramener la région de stockage dans un état verrouillé.

3. Appareil de reproduction selon la revendication 1, dans lequel le moyen de jugement comprend :
une unité de réception destinée à recevoir une entrée d'un numéro d'identification personnel (PIN) en provenance de l'utilisateur lorsque l'opération utilisateur reçue par le premier moyen de réception (3) est une opération de réécriture de la région de stockage (4a) ; et
une unité de jugement de PIN destinée à juger si l'utilisateur est autorisé lorsque le PIN entré est correct.

4. Appareil de reproduction selon la revendication 1, dans lequel une commande de la pluralité de commandes de contrôle est destinée à donner à l'appareil de reproduction l'ordre de transférer une image affichée, le niveau de condition d'exécution pouvant être dérivé du même ensemble de données boutons que la commande de contrôle étant établi à un niveau inférieur au niveau d'importance de la commande de produit,
le moyen d'autorisation jugeant, lorsque la commande de contrôle incluse dans l'ensemble de données boutons indiqué par l'opération utilisateur concerne la reproduction des données numériques, si le niveau de condition d'exécution se trouve dans le niveau autorisé,
l'appareil de reproduction comprenant en outre :
un moyen de contrôle de reproduction destiné à amener le moyen de reproduction à transférer l'image affichée uniquement lorsque le moyen d'autorisation a jugé que le niveau d'exécution se trouve dans le niveau autorisé.

5. Appareil de reproduction selon la revendication 4, dans lequel une importance d'une commande de contrôle est exprimée en tant que niveau PL1 parmi n valeurs possibles, où n ≥ 2, le niveau de condition d'exécution pouvant être dérivé de l'ensemble de données boutons comprenant la commande de contrôle comprend le niveau PL1, et le niveau autorisé est exprimé en tant que niveau PL2 parmi n valeurs possibles,
le moyen d'autorisation jugeant si le niveau PL1 pouvant être dérivé de l'ensemble de données boutons correspondant à l'image bouton indiquée par l'opération utilisateur se trouve dans le niveau autorisé PL2 stocké dans la région de stockage (4a).

6. Appareil de reproduction selon la revendication 1, dans lequel une fonction d'évaluation f(x) est attribuée aux données numériques, le niveau de condition d'exécution pouvant être dérivé de l'ensemble de données boutons étant une valeur de sortie y obtenue en appliquant un numéro d'identification x de chaque ensemble de données boutons à la fonction d'évaluation f(x), et le niveau autorisé étant un seuil pour la valeur de sortie de la fonction d'évaluation f(x),
le moyen d'autorisation jugeant si la valeur de sortie y de la fonction d'évaluation f(x) se trouve dans le seuil illustré par le niveau autorisé.

7. Appareil de reproduction selon la revendication 3, comprenant en outre un moyen de maintien destiné à maintenir une commande de contrôle attachée à une image bouton indiquée par une opération utilisateur lorsque le moyen d'autorisation juge que le niveau de condition d'exécution dépasse le niveau autorisé ;
un moyen d'affichage destiné à générer et à afficher une liste montrant une commande de produit par une commande de contrôle lorsque le moyen de jugement juge que l'utilisateur est autorisé et un nouveau niveau autorisé d'une valeur plus élevée a été écrit dans la région de stockage (4a) ; et
un troisième moyen de réception destiné à recevoir une opération provenant de l'utilisateur approuvant une exécution de la commande de contrôle après l'affichage de la liste de commandes de produit ;
le moyen d'exécution exécutant la commande de contrôle uniquement lorsque la commande de contrôle a été approuvée par l'utilisateur et le moyen d'autorisation juge que le niveau de condition d'exécution se trouve dans le nouveau niveau autorisé.

8. Appareil de reproduction selon la revendication 7, dans lequel le premier moyen de réception (3) reçoit une opération pour supprimer une commande de contrôle, l'appareil de reproduction comprenant en outre :
un moyen de suppression destiné à supprimer la commande de contrôle maintenue par le moyen de maintien lorsque le premier moyen de réception a reçu une opération de suppression.

9. Appareil de reproduction selon la revendication 1, dans lequel les données numériques sont transmises par l'entreprise en utilisant une onde de diffusion (1101), l'appareil de reproduction comprenant en outre :
un moyen de réception de diffusion (1102, 1104) destiné à recevoir l'onde de diffusion et à séparer les données numériques de l'onde de diffusion ;
le moyen de reproduction reproduisant les données numériques séparées.

10. Appareil de reproduction selon la revendication 1, dans lequel les données numériques sont transmises par l'entreprise sur un réseau, l'appareil de reproduction comprenant en outre :
un moyen de téléchargement destiné à télécharger les données numériques transmises sur le réseau ;
le moyen de reproduction reproduisant les données numériques téléchargées.

11. Appareil de reproduction selon la revendication 1, dans lequel les données numériques sont stockées sur u support de stockage et réparties par l'entreprise, l'appareil de reproduction comprenant en outre :
un moyen de lecture (7) destiné à charger le support de stockage et à lire les données numériques stockées sur le support de stockage ;
le moyen de reproduction reproduisant les données numériques lues.

12. Appareil de reproduction selon la revendication 11, dans lequel des informations temporelles illustrant une période valide pour les données numériques sont stockées sur le support de stockage, l'appareil de reproduction comprenant en outre :
une unité d'horloge (8) destinée à mesurer un temps présent ; et
un moyen de stockage destiné à lire les informations temporelles stockées sur le support de stockage, à comparer la période indiquée par celles-ci au temps présent mesuré par l'unité d'horloge, puis à interdire l'exécution de toutes les commandes de contrôle concernant les données numériques si le temps présent se trouve à l'extérieur de la période indiquée.

13. Support de stockage stockant en un format lisible par ordinateur un programme destiné à amener un ordinateur à reproduire des données numériques envoyées par une entreprise, dans lequel les données numériques comprennent des ensembles d'informations vidéo concernant une pluralité d'images vidéo, et des ensembles de données boutons correspondant à une pluralité d'images boutons à agencer sur chacune des images vidéo,
chaque ensemble de données boutons comprenant une commande de contrôle à exécuter lorsqu'une image bouton correspondante est indiquée, et des informations dont on peut dériver un niveau de condition d'exécution, et
une commande de la pluralité de commandes de contrôle étant destinée à donner à l'appareil de reproduction l'ordre de transmettre une commande produit à l'entreprise, le niveau de condition d'exécution pouvant être dérivé du même ensemble de données boutons que la commande de contrôle établissant une condition d'exécution selon une importance de la commande de produit,
le programme comprenant :
une étape de reproduction destinée à afficher chacune des images vidéo sur la base des ensembles d'informations vidéo, et à agencer la pluralité d'images boutons sur chacune des images vidéo sur la base des ensembles de données boutons ;
une première étape de réception destinée à recevoir une opération utilisateur provenant d'un utilisateur et à dériver le niveau de condition d'exécution de l'ensemble de données boutons correspondant à une image bouton indiquée par l'opération utilisateur reçue ;
une étape d'autorisation destinée à lire un niveau autorisé PL2 qui montre une étendue dans laquelle des opérations utilisateur sont autorisées, et
est stocké dans une région de stockage (4a) incluse dans un moyen de stockage (4) de l'ordinateur, et à juger, lorsque l'opération utilisateur reçue par la première étape de réception indique une image de la pluralité d'images boutons, si la condition d'exécution dérivée se trouve dans le niveau autorisé ; et
une étape d'exécution destinée à exécuter la commande de contrôle uniquement lorsque l'étape d'autorisation juge que le niveau de condition d'exécution se trouve dans le niveau autorisé.

14. Support de stockage selon la revendication 13, dans lequel la région de stockage (4a) est verrouillée dans un état non réinscriptible, le programme comprenant en outre :
une étape de jugement destinée à juger si l'utilisateur est autorisé lorsque l'opération utilisateur reçue par la première étape de réception est une opération de réécriture de la région de stockage ;
une deuxième étape de réception destinée à déverrouiller la région de stockage (4a) lorsque l'étape de jugement a jugé que l'utilisateur est autorisé, et à recevoir une opération utilisateur établissant un nouveau niveau autorisé ; et
une étape d'écriture destinée à écrire le nouveau niveau autorisé dans la région de stockage lorsque la deuxième étape de réception a reçu l'opération utilisateur établissant le nouveau niveau autorisé, puis à ramener la région de stockage dans un état verrouillé.

15. Support de stockage selon la revendication 14, dans lequel l'étape de jugement comprend :
une sous-étape de réception destinée à recevoir une entrée d'un numéro d'identification personnel (PIN) en provenance de l'utilisateur lorsque l'opération utilisateur reçue par la première étape de réception est une opération de réécriture de la région de stockage (4a) ; et
une sous-étape de jugement de PIN destinée à juger si l'utilisateur est autorisé lorsque le PIN entré est correct.

16. Support de stockage selon la revendication 13, dans lequel une commande de la pluralité de commandes de contrôle est destinée à donner à l'appareil de reproduction l'ordre de transférer une image affichée, le niveau de condition d'exécution pouvant être dérivé du même ensemble de données boutons que la commande de contrôle étant établi à un niveau inférieur au niveau d'importance de la commande de produit,
l'étape d'autorisation jugeant, lorsque la commande de contrôle incluse dans l'ensemble de données boutons indiquée par l'opération utilisateur concerne la reproduction des données numériques, si le niveau de condition d'exécution se trouve dans le niveau autorisé,
le programme comprenant en outre ;
une étape de contrôle de reproduction destinée à amener l'étape de reproduction à transférer l'image affichée uniquement lorsque l'étape d'autorisation a jugé que le niveau de condition d'exécution se trouve dans le niveau autorisé.

17. Support de stockage selon la revendication 16, dans lequel une importance d'une commande de contrôle est exprimée en tant que niveau PL1 parmi n valeurs possibles, où n ≥ 2, le niveau de condition d'exécution pouvant être dérivé de l'ensemble de données boutons comprenant la commande de contrôle, et le niveau autorisé est exprimé en tant que niveau PL2 parmi n valeurs possibles,
l'étape d'autorisation jugeant si le niveau PL1 pouvant être dérivé de l'ensemble de données boutons correspondant à l'image bouton indiquée par l'opération utilisateur se trouve dans le niveau autorisé PL2 stocké dans la région de stockage (4a).

18. Support de stockage selon la revendication 13, dans lequel une fonction d'évaluation f(x) est attribuée aux données numériques le niveau de condition d'exécution pouvant être dérivée de l'ensemble de données boutons étant une valeur de sortie y obtenue en appliquant un numéro d'identification x de chaque ensemble de données boutons à la fonction d'évaluation f(x), et le niveau autorisé étant un seuil pour la valeur de sortie de la fonction d'évaluation f(x),
l'étape d'autorisation jugeant si la valeur de sortie y de la fonction d'évaluation f(x) se trouve dans le seuil illustré par le niveau autorisé.

19. Support de stockage selon la revendication 15, le programme comprenant en outre :
une étape de maintien destinée à maintenir une commande de contrôle attachée à une image bouton indiquée par une opération utilisateur lorsque le moyen d'autorisation juge que le niveau d'exécution dépasse le niveau autorisé ;
une étape d'affichage destinée à générer et à afficher une liste montrant une commande de produit par une commande de contrôle lorsque l'étape de jugement juge que l'utilisateur est autorisé et un nouveau niveau autorisé d'une valeur plus élevée a été écrit dans la région de stockage (4a) ; et
une troisième étape de réception destiné à recevoir une opération provenant de l'utilisateur approuvant une exécution de la commande de contrôle après l'affichage de la liste de commandes de produit ;
l'étape d'exécution exécutant la commande de contrôle uniquement lorsque la commande de contrôle a été approuvée par l'utilisateur et
l'étape d'autorisation juge que le niveau de condition d'exécution se trouve dans le nouveau niveau autorisé.

20. Support de stockage selon la revendication 19, dans lequel la première étape de réception reçoit une opération pour supprimer une commande de contrôle, le programme comprenant en outre :
une étape de suppression destinée à supprimer la commande de contrôle maintenue par l'étape de maintien lorsque la première étape de réception a reçu une opération de suppression.
